# EUROPEAN PATENT APPLICATION

(11) **EP 2 493 001 A1**
(43) Date of publication of application: **29.08.2012**
(21) Application number: 10824962.4
(22) Date of filing: 20.10.2010
(51) Int. Cl.: H01M 10/056, C08F 20/34, H01G 9/038, H01M 4/13, H01M 4/62, H01M 8/02, H01M 8/10, H01M 10/052, H01M 10/0565, H01M 10/0585

(54) **ELECTROCHEMICAL DEVICE USING SOLID POLYMER ELECTROLYTE USING FINE POLYMER COMPOSITE PARTICLES**

(30) Priority: 21.10.2009 JP 2009242879; 04.06.2010 JP 2010129364
(71) Applicant: Kyoto University, Sakyo-ku Kyoto-shi Kyoto 606-8501 (JP); Institute of National Colleges of Technology, Japan, Hachioji-shi, Tokyo 193-0834 (JP)
(72) Inventor: TSUJII, Yoshinobu, Uji-shi Kyoto 611-0011 (JP); OHNO, Kouji, Uji-shi Kyoto 611-0011 (JP); FUKUDA, Takeshi, Uji-shi Kyoto 611-0011 (JP); SATO, Takaya, Tsuruoka-shi Yamagata 997-8511 (JP); MORINAGA, Takashi, Tsuruoka-shi Yamagata 997-8511 (JP)
(74) Representative: HOFFMANN EITLE
(86) International application number: PCT/JP2010/068454
(87) International publication number: WO 2011/049113

(57) **Abstract**

Disclosed is an electrochemical device comprising: a negative electrode having a negative electrode material layer at least on a surface; a positive electrode having a positive electrode material layer at least on a surface; and a solid electrolyte disposed between the negative electrode and the positive electrode,
wherein:
(1) the solid electrolyte is a solid polymer electrolyte that contains, as a main component, fine composite particles each comprising a polymer brush layer composed of polymer graft chains obtained by polymerization of a monomer having a polymerizable functional group; the fine composite particles form a substantially three-dimensional ordered array structure; and a continuous ion-conductive network channel is formed in each gap of the fine particles,
(2) the negative electrode or the negative electrode material layer and/or the positive electrode or the positive electrode material layer have gaps filled with the fine composite particles, and
(3) a contact interface between the solid electrolyte and the electrode material layer or the electrode is a polymer brush layer composed of polymer graft chains (the electrode material layer is at least one layer selected from the group consisting of the negative electrode material layer and the positive electrode active material layer, and the electrode is at least one electrode selected from the group consisting of the negative electrode and the positive electrode).

## Description

### ■ Technical Field

The present invention relates to an electrochemical device, more specifically to an electrochemical device using a solid polymer electrolyte membrane containing fine composite particles having predetermined polymer graft chains substantially identical in length, which are densely grafted on the particle surfaces by living radical polymerization.

In the present specification, "electrochemical device" designates a device that involves ion transfer (including cations, anions, and protons) or electrochemical reaction. Specific examples of electrochemical devices are primary cells; secondary cells (e.g., lithium-ion rechargeable batteries, nickel-hydrogen rechargeable batteries, or organic radical batteries); fuel cells such as polymer electrolyte fuel cells; solar cells such as organic dye-sensitized solar cells; electric double-layer capacitors; and electrochemical capacitors.

### ■ Background Art

Along with the recent popularization of lithium-ion rechargeable batteries or polymer electrolyte fuel cells, demands and needs for ion-conducting solid electrolyte membranes are further increasing. "Lithium ion rechargeable batteries" designates rechargeable batteries using, as a medium, a lithium ion existing in the electrolyte. A lithium ion rechargeable battery comprises a porous polymer film between opposed positive and negative electrodes. The porous polymer film serves as a separator for preventing short-circuit between the positive and negative electrodes, and contains an electrolyte for enabling lithium ion circulation between the electrodes. Further, "polymer electrolyte fuel cells" designates a kind of fuel cell using a reaction of hydrogen and oxygen to generate electricity. A polymer electrolyte fuel cell comprises an ionic-conductive polymer membrane serving as an electrolyte between the positive and negative electrodes.

Other examples include capacitors serving as electric storage devices. Capacitors use the "electric double layer" phenomenon discovered in 1879 by German scholar Helmholtz. Capacitors are considered to be ideal electric storage devices, as they are capable of charging and discharging electricity as is (without a chemical reaction of energy); and, in principle, can be used semipermanently. Accordingly, capacitors are currently under development for practical applications of various usages. An electric double-layer capacitor is one of the electric storage mediums for storing electricity, such as rechargeable batteries, capacitors, etc.; and comprises a pair of activated carbon electrodes (anode, cathode) and an electrolyte solution. The electric double-layer capacitor operates such that, upon charging, electrolyte ions in the electrode and counter electrode are physically adhered to the electrode surfaces (thereby forming an electric double-layer); the ions are released upon discharging. Because an electric double-layer capacitor performs charging and discharging without a chemical reaction, it suffers little electrode degradation, and can be used for a long period of time.

In recent years, various solid electrolytes have been suggested in view of applications to the aforementioned polymer electrolyte fuel cells or the like. Of these, solid electrolyte membranes using ionic liquids are especially attracting attention because of the particular characteristics of ionic liquid, i.e., high ionic conductivity, superior thermal and electrical stabilities, flame retardance, and nonvolatility. The solid electrolyte membrane using ionic liquid can be obtained either by a method of gelatinizing an ionic liquid (for example, Patent Document 1) or a method of impregnating a solid such as a ceramic membrane with an ionic liquid (for example, Patent Document 2).

Further, Patent Document 3 discloses another solid polymer electrolyte, which is a non-aqueous solid polymer electrolyte comprising, as a main component, fine composite particles having a polymer brush layer composed of polymer graft chains obtained by polymerizing an ionic liquid monomer having a polymerizable functional group. This solid polymer electrolyte is capable of preventing leakage of ionic liquid and deterioration of the ionic-conductivity of the ionic liquid, ensuring a high mechanical strength and superior morphological stability under room temperature or a higher temperature; this solid polymer electrolyte is adoptable to lithium ion rechargeable batteries or polymer electrolyte fuel cells.

### Citation List

### Patent Documents

[Patent Document 1] Japanese Unexamined Patent Publication No. 2007-48541
[Patent Document 2] Japanese Unexamined Patent 2004-515351
[Patent Document 3] Japanese Unexamined Patent Publication No. 2009-59659

### ■ Summary of Invention

### Technical Problem

Patent Document 1 has a drawback in that the gelatinization decreases the ionic conductivity to even less than the conductivity of the original ionic liquid, and that the gelatinized ionogels may be isolated and run off when the operating temperature is high. On the other hand, Patent Document 2 has a drawback of insufficient ionic conductivity compared with the case of a sole use of ionic liquid, and possible leakage of the permeated ionic liquid during the use. Therefore, when these electrolytes are used, it is necessary to prevent such liquid leakage, for example, by providing a separate gasket or the like.

On the other hand, the electrochemical device using a dry polymer solid electrolyte that can prevent liquid leakage suffers insufficient electricity conduction due to inadequate connectivity between the positive and negative electrodes and the solid electrolyte. Therefore, an object of the present invention is to provide an electrochemical device that contains a solid electrolyte causing less liquid leakage and ensuring high ionic conductivity and adequate electric connection in the interface between negative electrode and/or positive electrode and the solid electrolyte.

### ■ Solution to Problem

The present invention provides the following electrochemical devices and production methods thereof, and electrodes.

### [Item 1]

An electrochemical device comprising:
a negative electrode having a negative electrode material layer at least on a surface;
a positive electrode having a positive electrode material layer at least on a surface; and
a solid electrolyte disposed between the negative electrode and the positive electrode,
wherein:
(1) the solid electrolyte is a solid polymer electrolyte that contains, as a main component, fine composite particles each comprising a polymer brush layer composed of polymer graft chains obtained by polymerization of a monomer having a polymerizable functional group, the fine composite particles forming a substantially three-dimensional ordered array structure, a continuous ion-conductive network channel being formed in gaps between the fine composite particles,
(2) the negative electrode or the negative electrode material layer and/or the positive electrode or the positive electrode material layer have gaps filled with the fine composite particles, and
(3) a contact interface between the solid electrolyte and the electrode material layer or the electrode is a polymer brush layer composed of polymer graft chains (the electrode material layer is at least one layer selected from the group consisting of the negative electrode material layer and the positive electrode active material layer, and the electrode is at least one electrode selected from the group consisting of the negative electrode and the positive electrode).

### [Item 2]

The electrochemical device according to Item 1, wherein the electrochemical device serves as a lithium ion rechargeable battery and as an electrochemical capacitor.

### [Item 3]

The electrochemical device according to Item 1, wherein the monomer is an ionic liquid monomer; a surface occupancy of the polymer graft chains on the fine composite particles is 5 to 50%; a molecular weight distribution index of the polymer graft chains is 1.5 or less; the fine composite particles have a particle diameter of 30 nm to 10 µm; and an ionic conductivity is 0.08 mS/cm or more at 35°C.

### [Item 4]

The electrochemical device according to Item 1, wherein the electrochemical device contains a liquid compatible with the polymer graft chains.

### [Item 5]

The electrochemical device according to Item 4, wherein the liquid is an ionic liquid compatible with the polymer graft chains.

### [Item 6]

The electrochemical device according to Item 1, wherein the electrochemical device comprises a bipolar electrode between the negative electrode and the positive electrode via solid electrolytes, the bipolar electrode comprising a positive electrode material layer on one surface and a negative electrode material layer on the other surface.

### [Item 7]

The electrochemical device according to Item 1, wherein the electrochemical device further comprises a mobile ion.

### [Item 8]

The electrochemical device according to Item 1, wherein the mobile ion is a lithium ion.

### [Item 9]

The electrochemical device according to Item 1, wherein the electrochemical device comprises a bipolar electrode between the negative electrode and the positive electrode via solid electrolytes, the bipolar electrode comprising a positive electrode material layer on one surface and a negative electrode material layer on the other surface.

### [Item 10]

The electrochemical device according to Item 1,
wherein:
the electrochemical device comprises negative and positive electrodes, each of which comprises a sheet-like collector and an electrode material layer formed thereon; and a solid electrolyte layer disposed between the negative and positive electrodes, and
the electrochemical device comprises a frame that surrounds the solid electrolyte and each lateral side of the electrode material layers of the negative electrode and/or positive electrode formed on sheet-like electrodes, the frame being in close contact with each collector on which an electrode material layer is formed.

### [Item 11]

The electrochemical device according to Item 10,
wherein:
each electrode material layer of the negative and positive electrodes is formed on a part of one surface of each collector,
the frame surrounds a solid electrolyte and each lateral side of the electrode material layers of the negative electrode and/or positive electrode while being in close contact with each collector, and
the frame abuts and supports the collector to prevent warping of the collector.

### [Item 12]

A method for producing an electrochemical device, comprising:
a solid electrolyte membrane-attached electrode-producing step of:
   forming a frame on an electrode having an electrode material layer that is formed by applying ink containing either a positive electrode active material or a negative electrode active material onto a collector in a manner such that the frame surrounds the electrode material layer, and forming a solid electrolyte membrane by introducing, into the frame, a paste containing fine composite particles each comprising a polymer brush layer composed of polymer graft chains obtained by polymerization of a monomer having a polymerizable functional group, and drying the paste;
a fine composite particle-filled electrode-producing step of:
   permeating an ionic liquid solution of the fine composite particles into an electrode having an electrode material layer formed by applying ink containing another electrode active material of the positive or negative electrode that is different from said electrode active material onto a collector, thereby forming an electrode in which the gaps of the electrode material layer are filled with the fine composite particles; and
an assembly step of:
   superimposing the solid electrolyte membrane of the electrode obtained in the solid-electrolyte-membrane-attached-electrode producing step onto an electrode surface of the electrode filled with the fine composite particles obtained in the fine-composite-particle-filled-electrode producing step, thereby forming a contact interface of the electrode material layer and the solid electrolyte comprising a polymer brush layer.

The terms used in this specification and the claims are defined below.

"Ionic liquid monomer" designates, for example, an ionic liquid having a polymerizable functional group such as a reactive carbon-carbon double bond or the like. Here, "ionic liquid" is a salt having ionic conductivity and a low melting point, and is also referred to as an ionic liquid or a room temperature molten salt. "Ionic liquid" typically designates those having a relatively low-melting characteristic and are obtained by combining an organic onium ion as a cation, and an organic or inorganic anion as an anion. The melting point is generally not higher than 100°C, preferably not higher than room temperature.

"Polymer graft chains" are not limited to homopolymers that are obtained by using only one monomer, but include random copolymers or block copolymers obtained by using different multiple monomers (for example, ionic liquid monomer, styrene derivative, vinyl acetate, acrylonitrile, or ethylene oxide).

"Polymer brush layer" designates a polymer graft layer in which a large number of polymer graft chains are bonded to each surface of fine particles at a high density; the polymer graft chains are anisotropic in the vertical direction with respect to the particle surface. The solid polymer electrolyte has a structure in which fine composite particles are arranged in a three-dimensional ordered array, thereby having a polymer brush layer on its surface. On the other hand, the electrodes (negative electrode and/or positive electrode) or the electrode material layers (negative electrode material layer and/or positive electrode material layer) have a structure having gaps filled with fine composite particles. The surface of the electrode or the electrode material layer has an electrode active material (negative electrode active material or a positive electrode active material), an electrode material (activated carbon electrode), fine composite particles, a liquid (ionic liquid, etc.), and the like.

Therefore, by superimposing the solid polymer electrolyte onto an electrode, the contact interface between them serves as a polymer brush layer formed of polymer graft chains.

"Electrode" designates either or both of the negative and positive electrodes, "electrode material layer" designates either or both of the negative and positive electrode material layers, and "electrode active material" designates either or both of the negative and positive electrode active materials.

"Introducing a paste into a frame" means pouring a paste into a frame, including injection of a paste into a frame.

"Surface occupancy" designates the number of polymer chains on a fine particle surface per cross-sectional area of the monomer. Further, "bond" designates a general bond resulting from chemical reaction, such as a covalent bond or ionic bond.

"Molecular weight distribution index" designates a ratio of Mw (weight average molecular weight)/Mn (number average molecular weight).

"Fine composite particles" designates particles obtained by bonding polymer graft chains to the surfaces of fine particles. "Fine composite particles" are different from "fine particles." The fine particles that form the cores of the composite particles may be formed of a metal, an inorganic substance, or an organic substance.

"Main component" designates a component incorporated in the solid polymer electrolyte in an amount of 50 mass % or more based on the total weight (mass) of the solid polymer electrolyte. For example, insofar as the solid electrolyte contains fine composite particles as a main component, the solid electrolyte may be formed only of fine composite particles, or may also contain 50 mass % or less of ionic liquid, polymerizable ionic liquid monomer, ionic liquid polymer (polymerization product of polymerizable ionic liquid monomer), solvents, mobile ions, fine particles, and the like, in addition to fine composite particles.

The "solid" of the "solid polymer electrolyte" designates a self-standing structure of a fixed shape and volume that is resistant to an external force, and is thus illiquid. The structure preferably keeps a self-standing solid state under room temperature or a higher temperature, and preferably has a film-like or plate-like shape. The strength against an external force may be evaluated as a breaking strength.

"Compatibility" designates a characteristic that keeps a mixture from being separated into two layers when two components are mixed at a predetermined ratio and then allowed to stand.

"Mobile ion" may be a cation or an anion of an arbitrary valence insofar as it is electrically mobile; examples thereof include a lithium ion and a proton.

"Ordered array" designates a state where adjacent fine particles have substantially identical distances from each other. "Three-dimensional ordered array structure" designates a three-dimensional structure composed of such an ordered array.

"Positive electrode material layer" is obtained by mixing a positive electrode active material with a binder (binder polymer), and then applying the resulting paste to a collector or the like. The positive electrode material layer generally comprises a positive electrode active material, a binder, and, as necessary, a conductive material. Such a positive electrode material layer forms a positive electrode together with a collector. As one typical example, the positive electrode comprises a positive electrode material layer and a collector.

"Negative electrode material layer" is obtained by mixing a negative electrode active material with a binder (binder polymer), and then applying the resulting paste to a collector or the like. The negative electrode material layer generally comprises a negative electrode active material, a binder, and, as necessary, a conductive material. The negative electrode material layer forms a negative electrode together with a collector. As one typical example, the negative electrode comprises a negative electrode material layer and a collector.

The major parameters used in the claims and the specification are measured by the following methods.

### ■ Measurement methods for graft density and surface occupancy

The graft density is calculated from the absolute value of Mn (number average molecular weight) of graft chains, the amount of grafted polymers (graft amount), and the specific surface area of fine particles. The absolute value of Mn is determined by gel permeation chromatography or according to the monomer conversion; the graft amount is determined by thermogravimetric analysis or various spectroscopic methods; and specific surface area is calculated from the diameter of fine particles. The surface occupancy is calculated first by finding a cross-sectional area according to the length of the repeating units of fully-stretched polymer chains as well as the bulk density of the polymer (or the monomer), and then multiplying the result by the graft density. Here, the maximum theoretical value of the graft density depends on the size of the monomer (the cross-sectional area of the polymer). The maximum graft density becomes small when the monomer has a large size. On the other hand, the surface occupancy designates a graft density per cross-sectional area of the monomer (cross-sectional area of the polymer), which compensates the size difference of the monomer (thickness of the polymer). The maximum value of the surface occupancy is 100%. The "occupancy" means the proportion of the graft points (the first monomer) in the entire surface (the close-packing limit = 100%, the upper limit of grafting).

### ■ Breaking Strength

A sample is allowed to stand for at least 12 hours in a thermostat room kept at 23° C and 65%, and is cut into a piece 5 mm in width and 50 mm in length. According to JIS K7113, the breaking strength of the obtained sample is measured using an AGS-1KNG precise multifunctional testing machine (manufactured by Shimadzu Corporation).

### ■ Ionic Conductivity

A sample is cut into a circle having a diameter of 13 mm, or is layered on a stainless steel coin having a diameter of 12 mm (height = 10 mm). Another stainless steel coin of the same size serving as a counter electrode is placed on the sample so as to fix the sample between the two coins. An alternating voltage of 10 mV is applied to a lead directly attached to the coins using a LCR meter while varying the frequency from 2 MHz to 10 Hz, and the current and the phase angle response are measured. The ionic conductivity is found by a general method according to the intercept on the real number axis of a Cole-Cole plot. This measurement is performed at a predetermined temperature by placing a sample in a temperature- and humidity-controlled bath.

### ■ Weight Average Molecular Weight and Number Average Molecular Weight

Mw (weight average molecular weight) and Mn (number average molecular weight) of the graft polymer are estimated by gel permeation chromatography either by cutting out a graft polymer from a silica particle by way of hydrofluoric acid treatment, or by assuming that the free polymer generated upon the polymerization has the same molecular weight as that of the graft polymer. The absolute value of Mn is calculated according to the rate of polymerization.

### ■ Ordered Array

The surface of the solid polymer electrolyte is observed, for example, using a CCD microscope, an optical microscope, or an electron microscope, so as to measure the distances between 10 particles at a magnification sufficient to observe 20 to 100 fine particles within the visual field. The ordered array is determined when 85% or more of the measurement results fall within the range of "average value ± 1/2 of average value." For example, a solid polymer electrolyte comprising, as a main component, fine composite particles having polymer brush layers has a three-dimensional ordered array, thereby forming a continuous ion-conductive network in the gaps of the fine composite particles.

### Advantageous Effects of Invention

According to the present invention, the size of an electrochemical device can be reduced because the device can be configured without being equipped with a sealing unit such as a packing for preventing liquid leakage, by using a solid electrolyte having a high ionic conductivity and causing less liquid leakage from the electrolyte. Further, according to the present invention, it is possible to obtain an electrochemical device in which the interface between the solid electrolyte and the negative electrode and/or positive electrode is desirably bonded electrically via a polymer brush layer. More specifically, when the electrode has gaps in the electrode material layer for the purpose of increasing the surface area of the active material of the electrode, the gaps are filled with fine composite particles, which are conductive components of the solid electrolyte. This forms a conductive network channel (for example, ion conductive network channel), thereby allowing, for example, smooth ion transfer to the electrode active material, thus advantageously ensuring a significant increase in capacity or in output of the electrochemical device. The gaps in the electrode material layer (negative electrodes material layer or positive electrode material layer) are formed by adhesion of particulate electrode active material with a binder.

In the present invention, by using a particulate electrode material, it is possible to advantageously increase the surface area of the electrode and also more easily fill the gaps of the material with fine composite particles.

When the polymerizable functional group of the ionic liquid monomer is a radical polymerization functional group and when the polymerization is performed by the living radical polymerization, it is possible to obtain highly dense polymer brushes having a low molecular weight distribution index.

Since an ionic liquid monomer has characteristics such as flame retardance, high heat resistance, high ionic conductivity, and the like, the polymer brush chains obtained from an ionic liquid monomer also have these characteristics. By composing an electrochemical device using fine composite particles having such characteristics, it is possible to increase the safety, reliability and heat resistance of the device.

In a preferred embodiment, the surface occupancy of the polymer graft chains of the present invention in the fine composite particles is as high as 5 to 50%; therefore, the graft chains are highly stretched. Moreover, the stereoscopic repelling force of the highly dense graft chains causes the fine particles to be arranged in a more-precisely ordered array, thereby forming an ion-conductive network channel ensuring desirable efficiency, particularly upon the permeation of a liquid such as an ionic liquid.

When the molecular weight distribution index of the polymer graft chains is 1.5 or less, the lengths of the polymer brush chains are less varied; consequently, the stereoscopic repelling force of the highly dense graft chains having relatively uniform lengths causes the fine particles to be arranged in a more-precisely ordered array, thereby forming an ion-conductive network channel ensuring desirable efficiency particularly upon the permeation of a liquid such as an ionic liquid.

When the brush chains are highly compatible with the liquid added thereto (for example, solvent, ionic liquid, etc.), the brush molecules and the liquid molecules are dissolved in each other, thus causing a strong interaction. This advantageously ensures stability of the solid electrolyte membrane and prevents leakage of solvent even after long-term storage or use. By incorporating a solvent, it becomes possible to construct a more-precisely ordered three-dimensional array. The resulting ordered array structure advantageously ensures further higher ionic conductivity. Further, the incorporation of the solvent elongates the polymer graft chains bonded to the fine particles, thereby advantageously ensuring a desired mechanical strength (maintaining the solid electrolyte) even when the molecular weight of the chains is small.

When the solid polymer electrolyte contains fine composite particles and a small amount of an ionic liquid, the ionic liquid plasticizes the polymer brush on the fine composite particles, which improves molecular mobility of the brush, thereby further increasing the ionic conductivity. Moreover, since the ionic liquid has characteristics such as flame retardance, high heat resistance, high ionic conductivity, and the like, it is possible to increase the safety, reliability and heat resistance of the device using the ionic liquid. Moreover, it is possible to further increase the ionic conductivity due to the ionic conductivity of the ionic liquid itself.

When a free mobile ion (for example, a lithium ion or proton) is present in the solid polymer electrolyte, the ionic conductivity increases; thus, the solid polymer electrolyte becomes more useful as a proton-conducting membrane for use in separators of lithium ion rechargeable batteries or polymer electrolyte fuel cells. When the mobile ion is a lithium ion, it can be applied to a lithium ion rechargeable battery.

By using a solid electrolyte causing less liquid leakage and having high ionic conductivity for an electrochemical device comprising a solid electrolyte disposed between the positive electrode and the negative electrode, and a bipolar electrode in which a positive electrode material layer is formed on one side and a negative electrode material layer is formed on the other side, it is possible to produce a high voltage electrochemical device having a lamination of multiple bipolar electrodes without being equipped with a sealing unit such as a packing. For an electrochemical device with a lamination of multiple bipolar electrodes, the short circuit (liquid junction) of the electrolyte solution between the combined series-connected electrodes must be avoided. By using the electrolyte of the present invention, it is possible to produce a small-sized bipolar electrochemical device free from liquid junction. Consequently, the driving voltage per device cell increases, thereby increasing the energy density and output density of the device.

By providing a frame on the lateral sides of the solid electrolyte and the electrode material layer, it is possible to prevent liquid junction of the bipolar electrochemical device etc. even when liquid leakage from the solid electrolyte occurs.

By providing the frame so that the frame surrounds the lateral sides of the solid electrolyte and the electrode material layers in close contact with the collectors while abutting against the collectors of the negative electrode and the positive electrode to prevent warping of the collectors, it is possible to prevent not only liquid leakage but also warping of the collectors.

According to the production method for an electrochemical device of the present invention, a frame is formed around the electrode material layers, and then a solid electrolyte membrane is formed using the frame. With this method, the solid electrolyte membrane can be more easily formed, and liquid leakage can be more efficiently prevented by the closely-attached frame.

### Brief Description of Drawings

[Fig. 1] Fig. 1 is a schematic cross-sectional view of a battery according to the present embodiment.
[Fig. 2] Fig. 2 is a schematic cross-sectional view of a battery according to the present embodiment.
[Fig. 3] Fig. 3 is a conceptual diagram of a solid electrolyte according to the present embodiment.
[Fig. 4] Fig. 4 shows charge/discharge curves of a battery according to the present example.
[Fig. 5] Fig. 5 shows a result of charge-discharge cycle of a battery according to the present example.
[Fig. 6] Fig. 6 shows a result of charge-discharge cycle of an electric double-layer capacitor according to the present example.
[Fig. 7] Fig. 7 is a drawing showing frame shape examples and positions of the frame, the electrode material layer, and the collector.
[Fig. 8] Fig. 8 is a schematic view showing a production method according to the present invention.
[Fig. 9] Fig. 9 is a schematic view showing a production method according to the present invention.
[Fig. 10] Fig. 10 shows a charge-discharge result of a battery according to the present embodiment.
[Fig. 11] Fig. 11 is a scanning electron microscopy image of a solid electrolyte membrane obtained in Example 5.
[Fig. 12] Fig. 12 is a scanning electron microscopy image of a cross section of an electrode obtained in Example 6.

### ■ Description of Embodiments

An embodiment of the present invention is described below. However, it should be noted that the embodiment discussed below is solely for better understanding of the present invention, and should not be narrowly interpreted within the limits of such an embodiment, but rather may be applied in many variations within the spirit of the present invention in reference to the disclosure of the specification. In the following embodiment, the technical details of the present invention are described using a battery as an example of an electrochemical device.

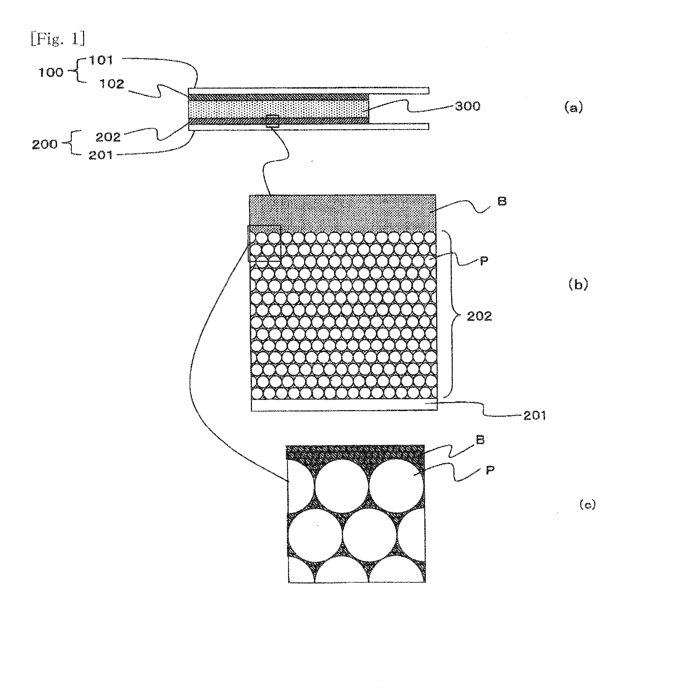

Fig. 1(a) is a schematic cross-sectional view of a battery according to the present embodiment. The battery according to the present embodiment comprises a negative electrode 100, a positive electrode 200 and a solid electrolyte 300 that is held between the negative electrode and the positive electrode. The solid electrolyte 300 is a solid polymer electrolyte comprising, as a main component, fine composite particles, each of which has a polymer brush layer formed of polymer graft chains obtained by polymerization of a monomer having a polymerizable functional group. The solid electrolyte 300 preferably has a small thickness to ensure a high conductivity. The detailed structure of the fine composite particles is described later. The negative electrode 100 is formed of, for example, a collector 101 and a negative electrode material layer 102. The negative electrode material layer 102 has gaps, and is obtained by drying a negative electrode paste applied on a collector. The negative electrode paste comprises a negative electrode active material, a conductive material, a solvent, a binder polymer and the like. The gaps of the negative electrode material layer 102 are filled with the fine composite particles. The details of this structure are described later. On the other hand, the positive electrode 200 is formed of, for example, a collector 201 and a positive electrode material layer 202. The positive electrode material layer 202 has gaps, and is obtained by drying a positive electrode paste applied on a collector. The positive electrode paste comprises a positive electrode active material, a conductive material, a solvent, a binder polymer and the like. The gaps of the positive electrode material layer 202 are also filled with the fine composite particles. These gaps are formed by applying the electrode paste containing a particulate or powdery positive or negative electrode active material and a binder on a collector, and then drying the paste. The gaps can be formed as long as a particulate or powdery positive or negative electrode active material is used. The gaps may be micropores of an electrode material, such as an activated carbon electrode.

The size of the gaps depends on the size of the positive or negative electrode active material. The size of the positive or negative electrode active material is not limited insofar as the fine composite particles can be contained in the gaps between the particles.

For example, as in the case of activated carbon electrode, the fine composite particles may be contained in micropores (gaps) of an electrode material.

In the electrode of the present embodiment, the fine composite particles are incorporated in the gaps of the electrode material layer (positive electrode material layer and/or negative electrode material layer). In the following, an example using a particulate electrode active material as an electrode active material is specifically described below. Fig. 1(b) is a conceptual cross-sectional view showing the inside of an electrode. The positive electrode material layer 202 has a structure in which the particles of a particulate positive electrode active material P are in contact with each other. The positive electrode material layer 202 is in contact with the solid electrolyte 300 in an upper portion of the figure, and also in contact with a collector material 201 of the electrode in a lower portion of the figure. Here, as shown in a magnified view in Fig. 1(c), the positive electrode and/or the negative electrode of the present invention has a structure in which the fine composite particles B are contained in the gaps of the particulate electrode active material (positive electrode active material or negative electrode active material) P, which forms the positive electrode material layer or the negative electrode material layer. The fine composite particles B are preferably contained evenly in the gaps. Because the fine composite particles are incorporated in each gap, the fine composite particles are also adhered to the surface of the electrode material layer (positive electrode material layer 202 or negative electrode material layer 102). This structure enables smooth ion transfer to each electrode material layer (positive electrode material layer or negative electrode material layer). Further, in this state where the particulate electrode active material P and the fine composite particles B are mixed, it becomes possible to more easily make electrical connection between the solid electrolyte, and the positive and negative electrode material layers.

Because the diameter of the fine composite particles used for the solid electrolyte according to the present embodiment is much smaller than the diameter of the particles of the particulate electrode active material used for the negative electrode material layer or the positive electrode material layer; that is, because the fine composite particles are sufficiently smaller than the gaps formed on the electrode material layer, the fine composite particles can be easily incorporated in the gaps of the particulate electrode active material. Further, in view of compatibility, it is preferable that the fine composite particles that exist in the region where the fine composite particles and the particulate electrode active material are mixed has the same structure as that of the fine composite particles contained in the solid electrolyte. With such a structure in which the fine composite particles exist in the gaps of the electrode material layer and that the solid polymer electrolyte according to the present embodiment is provided as a solid polymer electrolyte, a significant increase in electrical conduction property can be expected. In the present specification, for the sake of convenience, the electrode active material P is expressed either as a positive electrode active material or a negative electrode active material; however, the electrode active material P may comprise a conductive material, a binder polymer, etc., in addition to the electrode active material.

Although the electrode active material is composed of circular particles in the above conceptual view, the shape of the particles of the electrode active material is not limited insofar as they can provide gaps therebetween. More specifically, the particles of electrode active material may have a rod-like, scaly, fiber, or whisker-like shape. Such an electrode active material is preferably, for example, in a state where a particulate or powdery electrode active material capable of forming the gaps and a binder is mixed so that the particles of the electrode active material are bonded to each other. Alternatively, the electrode active material may also be in a state where the active material particles are fused together at their contact points by sintering or the like. When a binder is used, the amount of the binder is preferably in a range not impairing the electric contact between the electrode active material and the fine composite particles; specifically, the amount of the binder is, for example, not more than 10 mass % based on the entire mass of the electrode material layer. Further, it is also possible to use an electrode material obtained by processing a fiber-form electrode active material into a planar fabric (such as textiles, knit, felt, nonwoven fabric). Additionally, when a particulate electrode active material is used, the diameter of the particles of the active material is not particularly limited. However, for example, the diameter is preferably in a range from 1 µm to 200 µm, more preferably 1 µm to 50 µm, further preferably 3 µm to 20 µm. The diameter can be measured using a laser diffractometry/scattering particle size distribution measurement device.

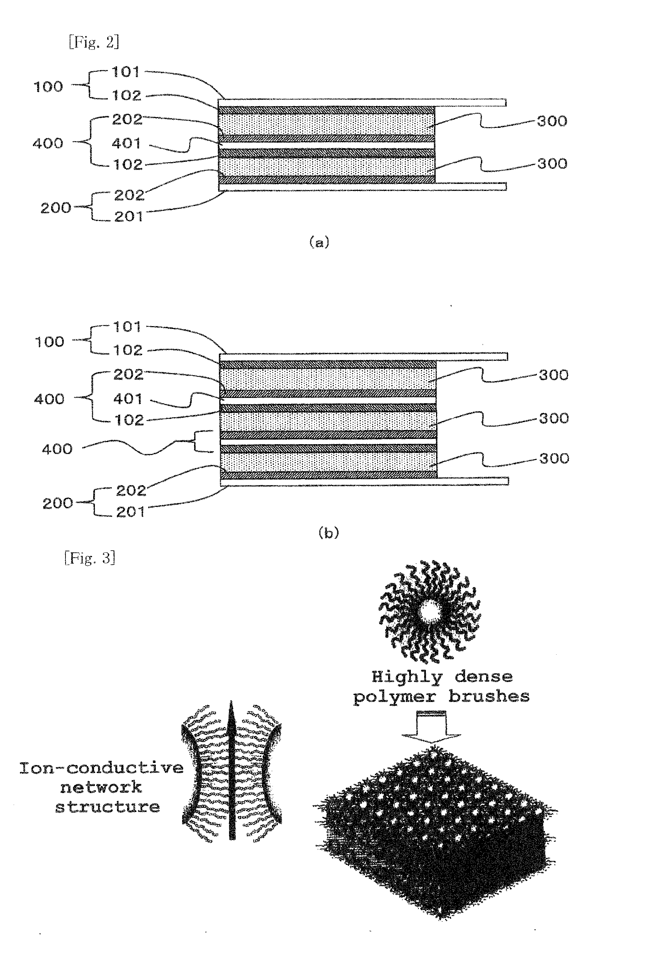

Fig. 2(a) is a schematic cross-sectional view according to a battery of the present embodiment, showing a multilayered bipolar cell having a bipolar electrode. The bipolar cell has a negative electrode 100 and a positive electrode 200, and comprises a bipolar electrode 400 provided between the negative electrode and the positive electrode via solid electrolytes 300; the bipolar electrode 400 has a negative electrode material layer 102 on one surface of a collector 401, and has a positive electrode material layer 202 on the other surface. The negative electrode 100 comprises a collector 101, and a negative electrode material layer 102 formed on the surface of the collector 101. The positive electrode 200 comprises a collector 201, and a positive electrode material layer 202 formed on the surface of the collector 201. In this structure, the gaps of each electrode material layer are also filled with the fine composite particles as in the above example. In Fig. 2(a), when the voltage between the electrode 200 and the electrode 400 is 3V, the voltage between the electrode 200 and the electrode 100 is 6V. Such lamination of plural unit cells with a bipolar electrode intervening therebetween is equivalent to a serial connection of unit cells. More specifically, as shown in Fig. 2(b), it is also possible to increase the number of layers by adding another solid electrolyte 300 and another bipolar electrode 400 to the bipolar cell in Fig. 2(a). There is no theoretical limitation of the number of layers.

The following discusses materials used for the battery according to the present embodiment.

### Negative Electrode Active Material

The negative electrode active material used in the present embodiment is not particularly limited; for example, an oxide-based electrode active material such as a Li₄Ti₅O₁₂-based material may be used. In addition, a carbon/graphite-based material, an alloy-based material containing Sn, Al, Zn, Si, etc. or a lithium-metal-based material may also be used as the negative electrode active material, as well as the aforementioned oxide-based electrode active materials.

### Positive Electrode Active Material

The positive electrode active material used in the present embodiment is not particularly limited; however, for example, lithium cobalt oxide (LiCoO₂), lithium nickel oxide (LiNiO₂), nickel-cobalt-based oxide (LiNi₁₋ₓCoₓO₂), lithium manganese oxide (LiMn₂O₄)_{,} nickel-manganese-based oxide (LiNi_{0.5}Mn_{0.5}O₂), nickel-manganese-cobalt-based oxide (LiNi_{1/3}Mn_{1/3}Co_{1/3}O₂), non-oxide materials such as an olivine-type lithium iron phosphate (LiFePO₄), lithium iron silicate-based oxide (Li₂Fe₁₋ₓMnₓSiO₄), Li₂MO₃-based oxide such as Li₂MnO₃ or Li_{1.2}Fe_{0.4}Mn_{0.4}O₂; or oxide electrode active materials such as sulfur compounds (Li₂S) may be used.

### Solid Electrolyte Membrane

Fig. 3 shows (in the lower right) a conceptual view of a solid electrolyte membrane (it should be noted that this is only a conceptual view; the present invention is not limited to this structure). Here, the solid electrolyte membrane according to the present embodiment at least comprises, as a main component, fine composite particles having polymer graft chains obtained by synthesis of a monomer; the polymer graft chains are bonded to each surface of the fine composite particles at a extra-high density (the high-density polymer brush is shown in the upper right of Fig. 3). The solid electrolyte membrane may also comprise other arbitrary components, including solvents, ionic liquids, lithium ions, protons; or other cations or anions, etc. Here, the solid electrolyte membrane according to the present embodiment is a self-standing membrane consisting only of the fine composite particles and other arbitrary components; however, the present invention is not limited to this form. For example, it is also possible to incorporate a membrane having such a formulation into a nonwoven fabric or other porous bodies (this is more specifically described later). In the following, firstly, respective components are described.

### Fine Composite Particles

The fine composite particles, as an essential component of the solid electrolyte membrane according to the present embodiment, have a structure such that polymer graft chains formed of a monomer or monomers are bonded to each surface of the fine particles at an extra-high density via a linking group. With such a structure, the graft chains are anisotropic due to the steric repulsion between adjacent graft chains, forming a polymer brush. Here, each fine composite particle is divided into "a polymer graft chain portion," "a fine particle portion," and "a linking group portion," which are described below in turn. After the descriptions of these portions, the structure and the property of the fine composite particles are more specifically explained.

### Polymer Graft Chain Portion

The polymer graft chain portion is formed of a homopolymer composed of only one monomer, or a random or block copolymer composed of different multiple monomers (for example, ionic liquid monomers, styrene derivatives, vinyl acetate, acrylonitrile, ethylene oxide, etc.). Because the fine composite particles are preferably produced by living radical polymerization, the polymerizable functional group is preferably a radical polymerizable functional group. An acryloyl group and a methacryloyl group are particularly preferable. Of these monomers, ionic liquid monomers are preferable. Here, the ionic liquid monomers are not limited insofar as they contain a polymerizable functional group and an ionic group. Examples of ionic liquid monomers used as a raw material include quaternary ammonium salt-based polymerizable ionic liquid, imidazolium salt-based polymerizable ionic liquid, pyridinium salt-based polymerizable ionic liquid, quaternary phosphonium-based polymerizable ionic liquid, guanidinium salt-based polymerizable ionic liquid, isouronium salt-based polymerizable ionic liquid, and thiouronium salt-based polymerizable ionic liquid. Ammonium salt-based ionic liquid has a higher withstand voltage than those of the imidazolium-based or pyridinium-based ionic liquid. More specifically, it has a low reductive decomposition potential and a high oxidative decomposition potential, and is stable in a wide voltage range. A quaternary ammonium salt-based polymerizable ionic liquid is preferable in terms of its wide voltage window and low viscosity. An ammonium salt-based ionic liquid having a relatively short alkyl group (about C1-C5) is particularly preferable because of its low viscosity.

Here, a preferred example of quaternary ammonium salt-based polymerizable ionic liquid is an acrylic acid derivative, a methacrylic acid derivative, or an ethacrylic acid derivative represented by the following formula:

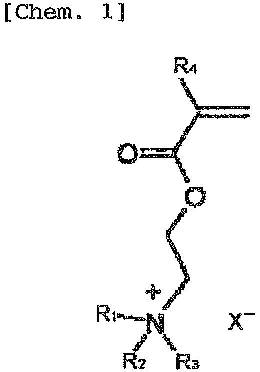

wherein R₁ and R₂ each represent C1-5 alkyl, R₃ represents C1-5 alkyl or a hydrogen atom, R₄ represents C1-2 alkyl or a hydrogen atom, and X represents N(CF₃SO₂)₂-{TFSI}, BF₄, PF₆, BF₃CF₃, etc.

Specific examples among above include an acrylic acid derivative monomer wherein R₁ and R₂ are a methyl group and R₃ is a hydrogen atom; a methacrylic acid monomer wherein R₁ is an ethyl group, R₂ is a hydrogen atom, and R₃ is a methyl group; and a methacrylic acid monomer wherein R₁ is an ethyl group, R₂ is a methyl group, and R₃ is a methyl group. However, the present invention is not limited to these examples, and a suitable substance is selected within the knowledge of skilled artisan. They may have an alicyclic ring structure in which two or more substituents of R₁ to R₃ are connected. It is also possible to use an alkoxy group in which some carbons of the alkyl group are substituted with oxygen atoms. These compounds can be produced by the method disclosed in W02004/027789. It should be noted that the term "alkyl" in this specification designates a monovalent group obtained by taking off a hydrogen atom from aliphatic carbon hydride (alkane), such as methane, ethane, propane or the like, which is generally represented by CₙH₂ₙ₊₁- (n is a positive integer). The alkyl may have a straight or branched-chain structure.

In addition to the polymerizable group and the ionic group, the ionic liquid monomer used as the raw material may have other functional groups. For example, to achieve greater proton conductivity, an ionic liquid monomer having a strong acid group (for example, sulfonic acid group) may be used. Further, it is also possible to combine a desired ionic liquid monomer with another monomer having a strong acid group so as to attain high proton conductivity without using an ionic liquid monomer having a strong acid group.

Although it is not particularly limited, the weight average molecular weight of the polymer graft chains is preferably 1000 to 300,000, more preferably 2000 to 100,000, and further preferably 4000 to 70,000. As the molecular weight increases, the fine composite particles more easily form a solid electrolyte membrane; however, it becomes more difficult to construct a three-dimensional ordered array, and the ionic conductivity is likely to decrease. On the other hand, although a decrease in molecular weight retards the formation of a solid electrolyte membrane of the fine composite particles, it becomes easier to construct a three-dimensional ordered array, and the ionic conductivity is likely to increase. Accordingly, it is preferable to determine an appropriate molecular weight depending on the material or target usage. Further, in order to equally exert compressive repulsion among the fine composite particles, the molecular weight distribution index of the polymer graft chains must be no more than 1.5, preferably no more than 1.3, more preferably no more than 1.2.

### Fine Particle Portion

The fine particles used as the fine composite particles according to the present embodiment are not limited, and may be an inorganic substance or an organic substance. Examples thereof include inorganic substances, e.g., silicon oxides such as silica; noble metals such as Au (gold), Ag (silver), Pt (platinum), or Pd (palladium); transition metals such as Ti, Zr, Ta, Sn, Zn, Cu, V, Sb, In, Hf, Y, Ce, Sc, La, Eu, Ni, Co or Fe, and oxides or nitrides thereof; and organic substances such as a polymer.

To perform extra-high density graft polymerization on the surfaces of fine particles, it is preferable to use monodisperse fine particles preferably having a diameter of 10 nm to 30 µm, more preferably 100 nm to 10 µm, further preferably 100 nm to 1 µm. Here, "monodisperse fine particles" designates particles with 10% or less variation in particle diameter. The "diameter" herein designates an average value of diameters of 100 fine particles observed by an electron microscope. Further, Japanese Unexamined Patent Publication No. 2006-208453 can be referred to for the concept of variation in particle diameter and measurement method.

The brush chain length may be arbitrarily adjusted in a range of about 3 nm to 100 µm, preferably 3 nm to 1 µm, more preferably 3 nm to 100 nm. Further, as a polymer electrolyte, the diameter of the fine composite particles preferably in a range of about 15 nm to 20 µm, more preferably 30 nm to 10 µm, further preferably 100 nm to 3 µm.

### Linking group portion

The linking group used for the fine composite particles according to the present embodiment is not particularly limited insofar as it is capable of linking the surfaces of the fine particles and the polymer graft chains. Here, the compound used as the material of the linking group portion comprises a group to be bonded with the surface of each fine particle and a polymerization initiator group for living radical polymerization. For example, when silica is used as fine particles, one example of the compound used as the material may be a silane coupling agent containing a polymerization initiator group represented by the following formula:

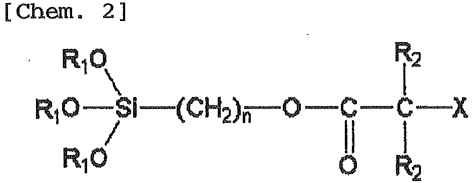

wherein spacer chain length n is preferably an integer of 3 to 10, more preferably an integer of 4 to 8, most preferably an integer of 6; R₁ is preferably C1-C3 alkyl, more preferably C1-C2 alkyl; R₂ is preferably C1-C2 alkyl; X is preferably a halogen atom, and is particularly preferably Br.
This silane coupling agent containing a polymerization initiator group may be produced, for example, by a method disclosed in WO2006/087839. Typical examples of silane coupling agents containing a polymerization initiator group include (2-bromo-2-methyl)propionyloxyhexyltriethoxysilane (BHE). In addition, in view of adjustment in graft density, it is possible to add a silane coupling agent not containing a polymerization initiator group (for example, generally used alkylsilane coupling agent) in addition to the silane coupling agent containing a polymerization initiator group. For example, when the fine particles already have a polymerization initiator site (for example, when the fine particles originally have the site or were given the site as a result of surface treatment such as plasma treatment), the linking group portion is not necessary (in other words, the linking group portion exists within the fine particles).

### Structure of fine composite particles

The fine composite particles have a structure in which polymer graft chains formed of an ionic liquid monomer are bonded to the surface of each particle at an extra-high density via a linking group (like a brush). Here, the graft chains are preferably bonded to the surface of each fine particle at a high density with a surface occupancy of at least several %, more preferably 5 to 50%, further preferably 10 to 40%. With such a high graft density, the graft chains become anisotropic (highly stretched), thereby more easily forming an efficient ion-conductive network channel, particularly upon the ionic liquid immersion. Further, the fine composite particles are preferably monodisperse fine particles having a diameter of 10 nm to 30 µm. The preferred range of particle diameter of the composite fine particles may differ in the particles used for the electrolyte and the in the particles used for the electrode. For the particles used for the electrode, it is necessary to adjust the diameter depending on the particle diameter of the electrode active material. It is possible to optimize the filling rate by mixing plural kinds of fine composite particles having different diameters. In either case, it is preferable to use monodisperse fine composite particles having a diameter of 15 nm to 30 µm, more preferably 20 nm to 20 µm, further preferably 30 nm to 10 µm, particularly preferably 100 nm to 3 µm. Japanese Unexamined Patent Publication No. 2006-208453 can be referred to for the concept of variation in particle diameter and measurement method.

### Solvent

Solvent is an arbitrary component of the solid electrolyte membrane according to the present embodiment, and may be incorporated therein in a smaller amount (weight basis) than the fine composite particles. The solvent serves to plasticize the fine composite particles and arrange the fine composite particles in an ordered array. The type of the solvent is not limited; however, it is preferable to use a solvent compatible with the polymer graft chains of the fine composite particles (good solvent). To be used for electrolytes of electrochemical devices, the solvent is preferably selected from solvents for batteries. Examples of solvents include carbonate-based solvents such as dimethyl carbonate, ethyl methyl carbonate, methylisopropyl carbonate, methylbutyl carbonate, diethyl carbonate, ethylpropyl carbonate, ethylisopropyl carbonate, ethylbutyl carbonate, dipropyl carbonate, diisopropyl carbonate, dibutyl carbonate, ethylene carbonate, propylene carbonate, or 1,2-butylene carbonate; lactone-based solvents such as γbutyrolactone; ether-based solvents such as 1,2-damethoxyethane, tetrahydrofuran, 2-methyltetrahydrofuran, 1,3-dioxane, 1,4-dioxane, or 4-methyl-1,3-dioxane; methyl formate; methyl acetate; and methyl propionate. For the solvents used herein, it is preferable to use the later-described ionic liquids. The content of solvent in the solid electrolyte membrane is preferably 1 to 100 weight%, more preferably 10 to 80 weight%, further preferably 20 to 50 weight%, based on the total amount of the fine composite particles (fine particles + polymer brush layer).

### Ionic Liquid

The ionic liquid is an arbitrary component of the solid electrolyte membrane according to the present embodiment, and may be incorporated therein in a smaller amount (weight basis) than the fine composite particles. The ionic liquid plasticizes the fine composite particles, and serves to arrange the fine composite particles in an ordered array. Examples of ionic liquid include quaternary ammonium salts, imidazolinium salts, pyridinium salts, quaternary phosphonium salts, guanidium salts, isouronium salts, and thiouronium salts. The ionic liquid may be the ionic liquid monomer itself contained as a component of the polymer graft chains (this is more specifically described later). The ionic liquid is preferably selected from liquids compatible with the polymer graft chains of the fine composite particles (good solvent). More specifically, the ionic liquid preferably contains at least one common ionic group; more preferably, the ionic liquid has a backbone to which a common ionic group is bonded. Further, the content of ionic liquid is appropriately determined according to the molecular weight of the polymer graft chains that form a polymer brush layer; however, the content is preferably 1 to 100 weight%, more preferably 10 to 80 weight%, further preferably 20 to 50 weight%, based on the total amount of the fine composite particles (fine particles + polymer brush layer).

### Lithium Ion

If high lithium ionic conductivity is particularly required, the solid electrolyte membrane preferably contains a lithium ion. The lithium ion (lithium salt) to be added is not limited, and examples thereof include LiN(CF₃SO₂)₂-{LiTFSI}, LiBF₄, and LiPF₆.

### Proton

If high proton conductivity is particularly required, the solid electrolyte membrane may contain a strong acid. The strong acid to be added is not limited, and examples thereof include sulfuric acid, benzenesulfonic acid, trifluoroacetic acid, trifluoromethanesulfonic acid, and phosphoric acids (phosphate, polyphosphate).

### Other Ions

In addition, halogen ions, such as iodine ions, which can contain an ion for driving the electrochemical device, may also be used. It should be noted that the ionic liquid used in the present invention as required may serve either as a cation or an anion in a dissociated state. In an electric double-layer capacitor, the ionic liquid serves as a carrier ion. Other ammonium ions, phosphorus ions, organic salts, and inorganic salts for general electric double-layer capacitors, and the like may also be used.

### ■ Structure of Solid Electrolyte Membrane

The solid electrolyte membrane according to the present embodiment has a three-dimensional structure or a two-dimensional structure in which the fine composite particles are arranged in an ordered array. Further, the fine composite particles are repulsive to each other due to the mechanical characteristic, i.e., a great compression resistance. It is assumed that an ion-conductive network channel is formed between the respective fine composite particles. It was confirmed that such a three-dimensional structure having an ordered array can be formed by allowing the fine composite particles according to the present embodiment to be present in a good solvent (colloid crystal, Japanese Unexamined Patent Publication No. 2003-327641). Therefore, without relying on the method of plasticizing the fine composite particles by an ionic liquid, it is possible to obtain a solid electrolyte membrane with a fixed crystal structure by fixing a colloid crystal liquid in some way. One of the typical fixing methods is a method of crosslinking polymer graft chains in a colloid crystal liquid.

### ■ Characteristic of Solid Electrolyte Membrane

The solid electrolyte membrane according to the present embodiment is characterized by superior ionic conductivity, superior form retention property, and superior mechanical strength. These advantages are explained below in turn.

### Ionic conductivity

The ionic conductivity of the solid electrolyte membrane according to the present embodiment is preferably as high as possible. In practice, the conductivity is preferably not less than 0.08 mScm⁻¹ at 35° C.

The ionic conductivity is preferably not less than 0.1 mScm⁻¹, more preferably not less than 0.5 mScm⁻¹, most preferably not less than 1 mScm⁻¹. This ionic conductivity is higher than that of the three-dimensional structure of PMMA graft chain fine composite particles. Although it is a solid, the solid electrolyte membrane has a high conductivity comparative to a bulk ionic liquid. Such a high ionic conductivity presumably derives from the ion channel formed between ionic liquid polymers of the fine composite particles arranged in an ordered array. Further, the structure filled with an ionic liquid and a structure in which a lithium ion is present have even higher ionic conductivity.

The ionic liquid polymer/silica composite fine particles of Production Example 2 were dispersed in an appropriate amount of acetonitrile (ACN). An ionic liquid (DE-TFSI) and a lithium salt (Li-TFSI) were added to the dispersion to afford an even solution. The composition of the solution is as follows: fine composite particles:DEME-TFSI:Li-TFSI:ACN = 0.423g:0.141g:0.081g:10g. ACN was added again to the resulting solid to afford an ACN solution having a concentration of 70 wt% (concentration of fine composite particles + DEME - TFSI + Li-TFSI). This solution was casted on a coin electrode for ion conductivity measurement, allowed to stand at 50° C under reduced pressure, and then solidified by drying under reduced pressure until the weight becomes constant. Thereafter, the electrode was heated to 120°C, and a counter electrode of the same size was set on an upper portion of the polymer electrolyte. Then, the pressure was increased so that the distance between the two electrodes fell to 100 µm, thereby bonding the coin electrode and the electrolyte. The ionic conductivity was found by measuring the complex impedance of the resulting coin electrode using an LCR meter. The conductivity was 0.2 mS/cm at 25°C.

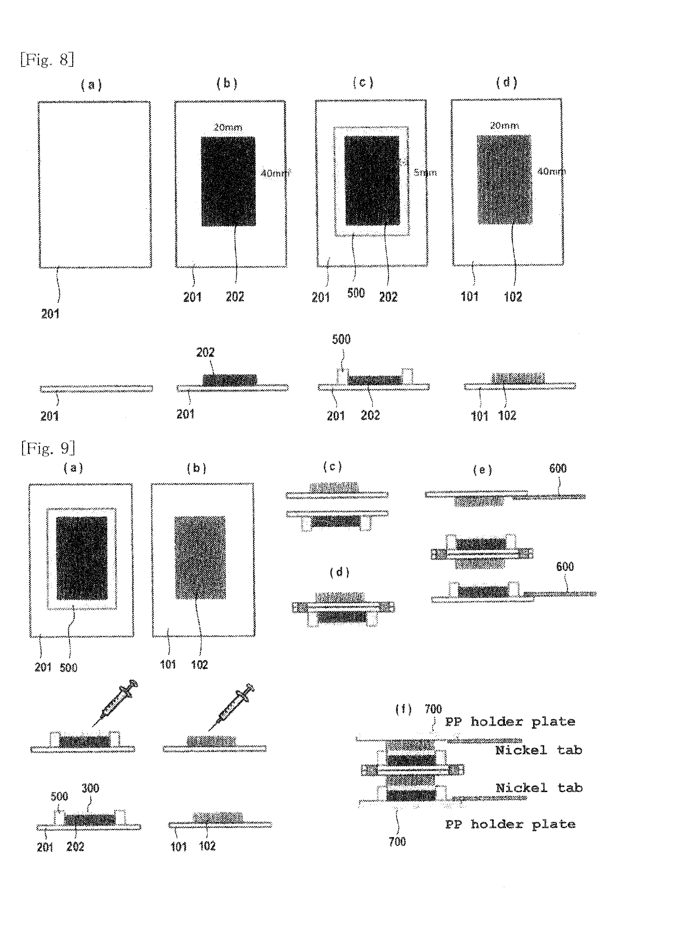

PC was added again to the resulting solid to afford a PC solution having a concentration of 70 wt% (concentration of fine composite particles + DEME - TFSI + Li - TFSI). The resulting solution was added dropwise to a positive electrode (Fig. 8(c)) previously dried at 50°C under reduced pressure. The resulting electrode was dried at 50° C under reduced pressure for a day to completely evaporate PC, thus obtaining a positive electrode comprising an electrode and a fine particle solid membrane formed thereon (Fig. 9(a)).

### ■ Form Retention Property

The solid electrolyte membrane according to the present embodiment has a form of a self-standing illiquid solid at least at a temperature range from room temperature to 150°C. More preferably, the temperature range to retain this form is from room temperature to 250°C. The upper limit of the temperature is not particularly limited; however, it is preferable that the solid electrolyte membrane keep a solid form until the temperature reaches the pyrolysis temperature of the brush chain polymer.

### ■ Mechanical Strength

The mechanical strength (breaking strength) of the solid electrolyte membrane according to the present embodiment is preferably such that the tensile shear strength is not less than 0.05 kgf/cm², more preferably not less than 0.1 kgf/cm² in the above temperature range (the temperature range specified in the section of "Form Retention Property").

As such, in the solid electrolyte membrane according to the present embodiment, the membrane strength is mainly attributable to the silica fine particles, and the ionic conductivity is mainly attributable to the ionic liquid polymer graft chains (polymer brush layer). Such a hybrid design with separate functions can provide an optimal solid electrolyte membrane satisfying both superior mechanical characteristics and a superior ionic conductivity by selecting an appropriate combination of suitable material or shape of the fine particles and the design of the ionic liquid polymer. In particular, the interface where the highly dense (at least 10%) brushes come in contact with each other is expected to have a high molecular mobility, i.e., superior ionic conductivity, due to particularly localized terminuses of polymer chains. As mentioned above, although the solid electrolyte membrane according to the present embodiment has a self-standing property, it may also have a state where the membrane having the aforementioned formulation is incorporated into a nonwoven fabric or other porous bodies if the membrane strength is insufficient due to a high temperature or the like.

The solid electrolyte comprises, as a component, fine composite particles having a polymer brush layer. Therefore, a polymer brush layer is present on the surface of the solid electrolyte. Accordingly, the contact interface between the electrode material layer (negative electrode material layer, positive electrode material layer) and the solid electrolyte is a polymer brush layer formed of polymer graft chains.

### ■ Method for producing solid electrolyte membrane

The method for producing the solid electrolyte membrane is described below. First, a method for producing fine composite particles, i.e., a main component of the solid electrolyte membrane, is described; thereafter, a method for producing the solid electrolyte membrane using the fine composite particles, etc., is described. However, it should be noted that the methods below are only examples.

### ■ Method for producing fine composite particles

The method for producing fine composite particles comprises: a first step of reacting fine particles with a compound serving as a material of a linking group portion, thereby forming a polymerization initiator group on each surface of the fine particles; a second step of bringing a monomer to be in contact with the fine particles having the polymerization initiator groups on the surfaces under a living radical polymerization condition, thereby obtaining a crude product containing fine composite particles having surfaces to which polymer graft chains are bonded at an extra high density; and a third step of purifying the crude product obtained in the second step, thereby obtaining fine composite particles.
Each step is described below in detail.

### First Step

The first step may be performed by a well-known method. For example, when using an inorganic/metal material (for example, silica) as the fine particles, and a silane coupling agent containing a polymerization initiator group as the compound serving as a material of a linking group portion, the silane coupling agent is hydrolyzed in the presence of water to obtain a silanol, which is then partially condensed to form an oligomer. The oligomer is then adsorbed to the silica surface by hydrogen-bond, and a dehydration condensation reaction is induced by drying the inorganic/metal material, thereby forming a polymerization initiator group on the material.

Here, the graft density of the fine particle surface may be arbitrarily changed by adjusting the proportion between the coupling agent containing a polymerization initiator group and the silane coupling agent which does not contain a polymerization initiator group. When the silane coupling agent consists only of the silane coupling agent containing a polymerization initiator group, a surface occupancy of more than 10% can be achieved after the following polymerization.

### Second Step

The second step carries out polymerization of a monomer material (ionic liquid monomer, etc.) under a living radical polymerization condition. One kind of monomer material or a combination of plural kinds may be used. Here, "living radical polymerization" designates a type of polymerization that causes no or little chain transfer reaction or termination reaction, and thereby the terminus of the polymerization product maintains a polymerization activity even after the polymerization reaction is completed; therefore, the polymerization reaction can be started again by adding a monomer. The characteristics of the living radical polymerization include a capability to synthesize a polymer having an arbitrary average molecular weight by adjusting the ratio of concentration between the monomer to the polymerization initiator; a very narrow molecular weight distribution of the polymer to be produced; and application to block copolymers. The above phrase "under a living radical polymerization condition" means selecting a suitable polymerization condition by a person skilled in the art so as to ensure desirable progress of living radical polymerization that starts from the polymerization initiator groups provided on the surface of the fine particles.

Here, when the graft chains are formed using the ionic liquid monomer used in the present embodiment, it is particularly preferable to adopt atom transfer radical polymerization (ATRP) or reversible chain transfer catalyzed polymerization (RTCP). The catalyst used in atom transfer radical polymerization is not particularly limited, and examples thereof include a combination of a monovalent copper such as copper (I) chloride, and a bidentate ligand such as bipyridine (bpy) in an amount of 1 mole equivalent to the copper catalyst. It is further preferable to add copper (II) dichloride to the combination. This method easily increases a number average molecular weight Mn in proportion to the rate of polymerization while maintaining the narrow molecular weight distribution index (for example, less than 1.3). This enables synthesis of an ionic liquid polymer having a controlled molecular weight, or enables control of molecular weight in a range of several thousands to several hundred thousands. The catalyst used in the reversible chain transfer catalyzed polymerization is not particularly limited, and examples thereof include a combination of a carbon catalyst such as 1,4-cyclohexadiene and a radical initiator. This method ensures particularly superior amino group resistance. Here, an increase in molecular weight of the ionic liquid polymer tends to increase the glass transition temperature and decrease the ionic conductivity. Therefore, it is necessary to optimize the molecular weight with emphasis on the characteristics (ionic conductivity) as an electrolyte membrane, and also in consideration of the mechanical characteristics of the membrane.

### Third Step

The target fine composite particles can be isolated by removing foreign substances (such as unreacted materials, byproducts, or solvents) from the crude product (reaction liquid) obtained in the second step by a usual method in the related field (for example, extraction, distillation, washing, concentration, sedimentation, filtration, drying, or the like), and then performing one or more of the usual-post processing steps adopted in the related field (for example, adsorption, elution, distillation, sedimentation, precipitation, chromatography, and the like).

### ■ Method for producing solid electrolyte membrane from fine composite particles, etc.

An example of the method for producing a solid electrolyte membrane comprises:
a first step of dispersing fine composite particles in a solvent to obtain a fine composite particle dispersion or a fine composite particle paste; and
a second step of applying or casting the fine composite particle dispersion or the fine composite particle paste on a predetermined base material, and then drying the applied or casted dispersion or paste to remove the solvent.

Here, the polarity of the solvent is also an important factor. It is preferable to use a solvent having a high polarity that is highly compatible with the ionic liquid polymer. Preferable examples of such solvents include carbonate-based solvents such as acetonitrile or propylene carbonate.

Further, when a solid electrolyte membrane filled with an ionic liquid is produced, the method may be carried out by using a mixed solvent of a solvent and an ionic liquid in the first step, and then removing only the mixed solvent in the second step.

Additionally, when a solid electrolyte membrane containing a lithium ion is produced, the method may be carried out by using a solution obtained by previously dissolving a lithium salt in an ionic liquid or a solvent in the first or second step. This manner is also adopted when other ion compounds or acids are added.

Furthermore, when the method is performed by carrying out the first step by forming a colloid crystal liquid of the fine composite particles and then immobilizing the colloid crystal, an extra crosslinking step is performed as necessary by performing a well-known crosslinking method (for example, heating, energy line irradiation, etc.) after adding a crosslinking agent to the colloid crystal liquid. In this case, the polymer graft chains of the fine composite particles must contain crosslinking groups; accordingly, a monomer having a crosslinking group is used for the production of fine composite particles (for example, an ionic liquid monomer having a crosslinking group is used or other monomers having a crosslinking group are added).

Alternatively, as another method for immobilizing the colloid crystal liquid, it is also possible to form a colloid crystal liquid of fine composite particles in the first step using a solvent having a high fusing point (above room temperature), and then perform a cooling step of decreasing the temperature to a fusing point of the dispersion solvent or lower to immobilize the colloid crystal (in this case, the second step is not required).

When the method is performed by carrying out the first step by forming a colloid crystal liquid of the fine composite particles and then immobilizing the colloid crystal, it is possible to add a step of confirming the formation of a colloid crystal after the first step. The formation of a colloid crystal can be confirmed by visually detecting emission of the structural color of the dispersion, or by taking a three-dimensional image of confocal laser scanning microscopy (CLSM). CLSM is characterized by having a pinhole diaphragm placed at a point confocal to the focal plane of the sample. With this configuration, CLSM is capable of taking a two-dimensional image of the inside of the sample without stray light. Further, CLSM performs point-scanning of the two-dimensional surface of the sample to obtain optical slice images, and then performs the same operation while moving along the Z-axis of the sample. With this operation, a three-dimensional image is formed from the obtained large number of slice images of the two-dimensional surface. By performing such a CLSM measurement, it becomes possible to confirm the ordered array structure of the fine composite particles in the dispersion.

### ■ Method for simultaneously forming fine composite particles and solid electrolyte membrane

The above method first produces fine composite particles, and then produces a solid electrolyte using the fine composite particles; however, they may be produced at the same time. More specifically, the simultaneous production of fine composite particles and a solid electrolyte may be performed by a method of using an ionic liquid monomer as a solvent in the step of producing fine composite particles. More specifically, living radical polymerization is performed according to the above method to polymerize a part of the ionic liquid monomer. Consequently, the monomers not involved in the polymerization remain inside the solid electrolyte membrane as a plasticizer. As such, by appropriately performing living radical polymerization, it is possible to form fine composite particles and simultaneously obtain a solid electrolyte membrane in which an ionic liquid monomer is present between the fine composite particles. This polymerization may be performed inside a nonwoven fabric or other porous bodies. It is also possible to perform polymerization in a porous body in which an ionic liquid monomer and fine particles are permeated into the gaps. In this polymerization, it is possible to add a substance other than an ionic liquid monomer having no polymerization reactivity.

If the membrane strength is not ensured under a high temperature, as described above, it is effective to incorporate the membrane having the aforementioned formulation in a nonwoven fabric or other porous bodies for practical use. Such incorporation may be performed by dissolving previously obtained fine composite particles, an ionic liquid, and, as necessary, other additives in a solvent, impregnating a nonwoven fabric or other porous bodies with the resulting solution, and then evaporating only the solvent (this method may also be referred to as a method of performing production of a solid electrolyte membrane from fine composite particles inside a nonwoven fabric or other porous bodies).

### ■ Method for producing battery

The battery according to the present embodiment may be produced by layering a solid electrolyte, a negative electrode (or a positive electrode) and a positive electrode (or a negative electrode). In the negative or positive electrode, fine composite particles are incorporated in gaps of an electrode material layer. More specifically, the method for producing an electrode in which the fine composite particles are incorporated in gaps of an electrode material layer is not particularly limited; however, it is possible to adopt the aforementioned method described as a production method of a solid electrolyte membrane, i.e., the method comprising the second step of applying or casting a fine composite particle dispersion or a fine composite particle paste on the surface of a negative electrode material layer of a negative electrode or a positive electrode material layer of a positive electrode. When the fine composite particles and the solid electrolyte membrane are formed at the same time, the electrode in which the fine composite particles are incorporated in gaps of an electrode material layer is produced by performing polymerization on the surface of an electrode material layer on the negative electrode or the positive electrode. Alternatively, the fine composite particles may be incorporated in gaps of an electrode material layer by forming an electrolyte membrane on an electrode material layer. The electrolyte membrane can be formed by solvent casting method, dip coating method, squeegee method (doctor blade method), ink-jet method, screen printing, or the like.

In the case of a bipolar electrode, a method of performing the above step on both surfaces or a dip coating method that immerses a bipolar electrode in a fine composite particle dispersion and then draws out the electrode is performed to incorporate fine composite particles in the gaps of a negative electrode material layer and a positive electrode material layer. Further, since this surface treatment suppresses the coarseness of the electrode surface, the contact between the electrode material layers and the solid electrolyte can be improved. The electrode may be immersed and drawn out only once; however, by performing the immersion/drawing multiple times (for example, 10 times), it is possible to form a thick, solid electrolyte while smoothing the surface.

The electrochemical device according to the present invention preferably comprises a frame that surrounds the lateral sides of the solid electrolyte, and the negative and/or positive electrode material layer(s) provided on the surface of a sheet-like electrode, while being in close contact with a collector on which the electrode material layer is formed. By providing such a frame, it is possible to prevent liquid leakage from the solid electrolyte. An electrochemical device using a bipolar electrode tends to cause a short circuit between the multiple electrode layers due to liquid leakage; however, the provision of the above frame can solve this problem. Furthermore, the frame preferably surrounds the lateral sides of the solid electrolyte, the negative electrode material layer, and the positive electrode material layer. With such a configuration, it is possible to more securely prevent leakage of the solid electrolyte liquid from the gaps of the electrode material layer.

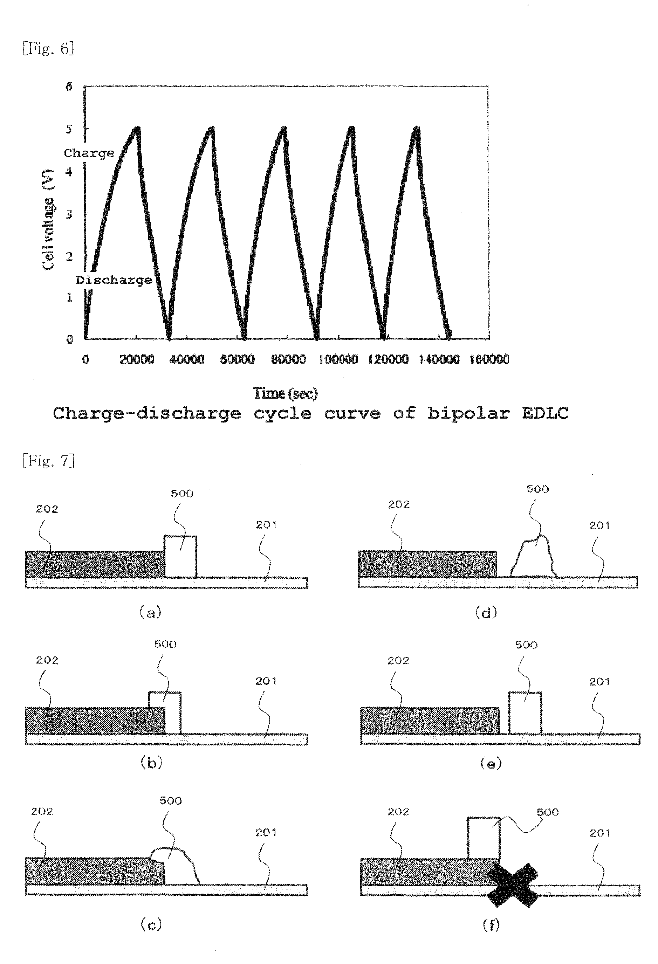

The shape of the frame is not particularly limited insofar as the frame is in close contact with the collector. Fig. 7 is a drawing showing frame shape examples and positions of a frame 500, an electrode material layer (in this example, a positive electrode material layer 202), and a collector (in this example, a collector 201). The solid electrolyte and the frame may be in close contact with each other (Fig. 7(a)). However, it is not acceptable to form the frame 500 so that the frame 500 is entirely disposed on the electrode material layer 202 (Fig. 7(f)). The frame may be separated from the electrode (Fig. 7(d), 7(e)). The frame may be provided such that half of the frame is disposed on the electrode, while the other half is in close contact with the collector (Fig. 7(b)(c)). The edge region of the electrode has a low mechanical strength; however, by forming the frame using a ultraviolet-curable resin after forming the electrode material layer, the frame resin, which is incorporated in the gaps of the electrode and then cured, strengthens the structure of the edge region of the electrode. The frame preferably has a greater length (height) than the thickness-wise length (i.e., the height) of the electrode material layer.

The electrochemical device according to the present invention is preferably configured such that the negative electrode and the positive electrode each comprise a sheet-like collector and an electrode material layer applied on one surface of the collector. Further, the device having such a structure is preferably further configured such that a frame covers the lateral sides of the solid electrolyte membrane and the electrode material layers while abutting the collectors of the negative and positive electrodes to support the collectors so that the collectors are prevented from warping. By thus configuring the frame to provide a dynamical support between the collectors, it is possible to obtain an electrochemical device in which its edge region is less subject to warping, even when the device has a lamination structure of multiple sheet-like collectors with flexible edges. In this case, the frame preferably has a shape that follows the shapes of the edges of the sheet-like collectors of the negative and positive electrodes. Further, it is preferable that the frame itself has a high strength.

The method for forming the frame is not particularly limited; however, it is preferable to form a bank-shaped frame on the electrode material layer by covering the lateral side of the electrode material layer, before forming the solid electrolyte membrane. After the frame is formed in this manner, it is preferable to form the solid electrolyte membrane by introducing a liquid composition for forming a solid electrolyte membrane. The frame is preferably formed by shaping a liquid resin or a resin solution obtained by dissolving a resin in a solvent by way of screen printing, dispenser method, or inkjet printing using the liquid resin or resin solution as ink. For the resin, both heat-curable resins and thermoplastic resins are usable; however, photo-curable resins that are curable by irradiation of ultraviolet or visible light are particularly preferable. It is further preferable to cure the resin frame formed by the aforementioned printing method by light irradiation, thereby ensuring a high mechanical strength of the frame. By thus forming a frame before forming the solid electrolyte, it is possible to more easily form the solid electrolyte membrane while ensuring close contact between the solid electrolyte and the frame.

In the following, a method for producing a bipolar cell according to the present invention is described in detail. However, the method described below is only an example, and the production method of the present invention is not limited to the example below.

A method for producing a bipolar cell comprises, for example, a solid electrolyte membrane-attached-electrode-producing step, a fine composite particle-filled-electrode-producing step, and an assembly step. In the present production method, the step for producing an electrode with a solid electrolyte membrane and the step for producing an electrode filled with fine composite particles are performed first, and then the assembly step is performed.

In the step for producing an electrode with a solid electrolyte membrane and the step for producing an electrode filled with fine composite particles, ink containing a positive electrode active material or a negative electrode active material is used. The ink indispensably contains a positive electrode active material or a negative electrode active material, and preferably contains a conductive material, a binder polymer, and a solvent.

The conductive material is not limited insofar as it renders a carbonaceous material electrically conductive. Examples of conductive materials include carbon black, Ketjenblack, acetylene black, carbon whisker, carbon fiber, natural graphite, artificial graphite, titanium oxide, ruthenium oxide, and metallic fibers of aluminium, nickel, etc. These substances may be used solely, or in a combination of two or more. Of these, Ketjenblack or acetylene black, which are types of carbon black, is preferable.

Suitable examples of binder polymers include unsaturated polyurethane compounds, polymer materials having an interpenetrating polymer network or a semi-interpenetrating polymer network, polyester-based thermoplastic resins, and fluorinated polymer materials. By using these polymer materials having high adhesiveness, it is possible to increase the physical strength of the electrode. Further, fluorinated polymer materials have superior thermal and electrical stabilities.

Organic solvents and water are both usable as a solvent; the solvent is suitably selected from known solvents.

As a preferable formulation of the ink, the content of the positive electrode active material or the negative electrode active material is, for example, 20 to 70 wt%, based on the total weight of the ink; the content of the conductive material is preferably 2 to 15 wt%, based on the total weight of the ink; and the content of the binder polymer is preferably 2 to 20 wt%, based on the total weight of the ink.

The ink is used by being applied onto the collector. The collector is not particularly limited. Exemplar materials of a positive electrode collector include an aluminum foil or aluminum oxide. Exemplar materials of negative electrode collector include a copper foil, a nickel foil, and a metal foil with a copper-plated or a nickel-plated surface.

### Solid Electrolyte Niembrane-Attached-Electrodo-Producing Step

The ink is applied and spread onto a collector (for example, a positive electrode collector 201) formed of an aluminum foil or the like (Fig. 8(a)) with a uniform thickness, thereby constructing an electrode material layer (for example, a positive electrode material layer 202) (Fig. 8(b)). Here, the thickness of the electrode portion is not particularly limited; however, the thickness preferably falls within a range of 5 to 1000 µm. Although the thickness should be adjusted according to the use of the electrochemical device, in general, it is preferable to adjust the thickness in a range of about 10 to 200 µm.

Next, a frame 500 is formed around the electrode material layer (for example, a positive electrode material layer 202) constructed by application of the ink. Although it is not particularly limited, it is preferable to form a frame around the electrode, for example, using an ultraviolet-curable resin. The ultraviolet-curable resin is not particularly limited, and examples thereof include acrylic and methacrylic resins. The resin is selected from resins insoluble to the electrolyte solution and ionic liquid used in the battery.

Next, according to the aforementioned method for producing the solid electrolyte membrane, a composite particle paste is introduced in the frame formed on the electrode, and is dried to form a solid electrolyte membrane 300 (Fig. 9(a)). By thus forming a solid electrolyte membrane after forming the frame, the frame and the solid electrolyte membrane are more easily brought into close contact with each other, thereby appropriately preventing liquid leakage.

### Fine Composite Particle-Filled Electrode-Producing Step

The ink is applied and spread onto a collector (for example, a negative electrode collector 101) formed of an aluminum foil or the like with a uniform thickness, thereby constructing an electrode material layer (for example, a negative electrode material layer 102) (Fig. 8(d)). Here, the thickness of the electrode portion is not particularly limited; however, the thickness preferably falls within a range of 5 to 1000 µm.

A fine composite particle ionic liquid solution is applied onto an electrode material layer to impregnate the electrode material layer with the solution so that the gaps of the electrode material layer are filled with fine composite particles. The fine composite particle solution used herein is not particularly limited; however, the fine-particulate concentration of the solution is preferably in a range of about 10 to 90 weight%, more preferably 50 to 90 wt%. An example of fine composite particles used herein are the aforementioned fine composite particles. The ionic liquid may be selected from various ionic liquids; however, an aliphatic quaternary ammonium salt-based ionic liquid is particularly preferable. The anion of the ionic liquid and the anion of the lithium salt may be the same or different. The ionic liquid solution is preferably permeated into an electrode layer (for example, a negative electrode material layer 102) of an electrode that is previously dried at 70 to 150° C for 5 to 24 hours under reduced pressure (Fig. 9(b)). It is further preferable that, after the solution is permeated, the solution adhered to the periphery is cleaned off, and the electrode is allowed to stand at 50 to 120°C for 5 hours to 24 days under reduced pressure to facilitate the permeation of the solution into the electrode.

### Assembly Step

The collectors of the positive electrode and the negative electrode thus obtained are bonded together, thereby creating a bipolar electrode having positive and negative electrodes on the front and rear sides (Fig. 9(c)(d)). Thereafter, the positive electrode, the bipolar electrode, and the negative electrode are stacked in this order; and terminals 600 are connected to the positive electrode on the bottom of the lamination, and to the negative electrode on the top of the lamination (Fig. 9(e)). Here, it is preferable to cover the top and the bottom of the lamination with polypropylene plates 700 (Fig. 9(f)).

As described above, the present invention has been illustrated using the preferred embodiments of the present invention. However, the present invention should not be construed to be limited to these embodiments. It is understood that the scope of the present invention should be construed solely on the basis of the claims. It is understood that those skilled in the art can carry out an invention within the scope equivalent to the description of the specification, based on the description of the specific preferred embodiments, the description of the present invention and the common technical knowledge. It is understood that the patents, patent applications, and other documents cited in the present specification should be incorporated by reference in the present specification, as if the contents thereof are specifically described herein.

### Examples

### Production Example 1: Synthesis of Ionic Liquid Monomer

### ■ Synthesis of N,N-diethyl-N-(2-methacryloylethyl)-N-methylammonium bis(trifluoromethylsulfonyl) imide (DEMM-TFSI)

10.12 g of 2-(diethylamino)ethylmethacrylate was dissolved in 100 ml of tetrahydrofuran, and 4.08 ml of iodomethane diluted with 200 ml of tetrahydrofuran was added thereto using a dropping funnel at a speed of about 1 drop per second, thereby causing a reaction. This step was performed in an ice bath. After the reaction, the reaction product was allowed to stand for 24 hours. The precipitated solid was dissolved in ethanol; thereafter, tetrahydrofuran was added to cause recrystallization, thereby obtaining a white crystal of N,N-diethyl-N-(2-methacryloylethyl)-N-methyl ammonium iodide (DEMM-I). 20.8 g of DEMM-I crystal was dissolved in 70 ml of water, and the obtained liquid was slowly reacted with 18.31 g of lithium bis(trifluoromethanesulfonyl)imide dissolved in 70 ml of water, thereby exchanging ions. This reaction was performed in an ice bath, and the reaction was advanced while avoiding a rapid temperature change. The lower yellow liquid layer was extracted using an ethyl acetate, and dried overnight under reduced pressure using an evaporator and a vacuum pump to completely remove the solvent, thereby obtaining an ionic liquid DEMM-TFSI (yield = 42%).

### Structural Analysis

The measurements of IR spectrum and ¹H-NMR spectrum of DEMM-TFSI were performed using a Varian 2000 FT-IR spectrometer and a JEOL GX-400 spectrometer, respectively. Deuterated acetonitrile was used for the measurement of solvent, and tetramethylsilane (TMS) was used for the measurement of standard substance.
¹H-NMR(Acetonitrile) δ=1.33 (t, 6H), 1.99 (s, 3H), 3.00(s, 3H), 3.41 (q, 4H), 3.60 (t, 2H), 4.51 (t, 2H). 5.75 (s, 1H), 6.14 (s, 1H), Infrared spectra; methacryl group (1680 and 1720 cm⁻¹)

### Production Example 2: Synthesis of Ionic Liquid Polymer/Silica Fine Composite Particles (number average molecular weight = 5000)

0.0064 g of copper chloride obtained by mixing copper chloride CuCl (I) and copper chloride CuCl₂ (II) at a molar ratio of 9:1 was added to 0.0122 g of ethyl 2-bromoisobutyrate (EBIB). Further, 0.0195 g of 2,2'-bipyridine, 3.0000 g of ionic liquid monomer, and 3. 0381 g of solvent acetonitrile were added and mixed well. Then, 0.1215 g of silica fine particles (SiP, average diameter = 130 nm) treated with (2-bromo-2-methyl)propionyloxyhexyltriethoxysilane(BHE) was added to the mixture. Weighing and mixing were performed in an argon gas atmosphere glove box kept at a low oxygen concentration of 30 to 60 ppm. The molar ratio of the mixture is expressed as EBIB:2,2'-bipy: CuCl [mixture of CuCl (I) and CuCl₂ (II)]:DEMM-TFSI =1:2:1:100. The content of acetonitrile is 50 wt% based on the total weight of the mixture, and the content of SiP is 2 wt% based on the total amount of the mixture. The above mixture was kept at 70°C for 40 minutes, and polymerization was carried out to synthesize silica fine particles with closely packed Poly(DEMM-TFSI) on the surfaces. The number average molecular weight (Mn) and the molecular weight distribution index (Mw/Mn) of the free polymer cooperatively formed in the synthesis system were 5000 and 1.17, respectively. Accordingly, it is assumed that the ionic liquid polymer grown on the silica surface also has the same length and distribution. Further, the surface occupancy was 30%.

### Determination of Number Average Molecular Weight And Molecular Weight Distribution

The silica fine particles having closely packed Poly(DEMM-TFSI) on the surfaces (Poly(DEMM-TFSI)/SiP) were removed; then, residual water was poured to a water/ethanol(1/1) solution, and polymers resulting from reprecipitation were collected. The number average molecular weight (Mn) and the molecular weight distribution index (Mw/Mn) of the free polymer cooperatively formed in the synthesis system were 5000 and 1.17, respectively.

Here, the molecular weight of the synthesized ionic liquid polymer was measured by Gel Permeation Chromatography (GPC). The measurement was performed at 40°C using Shodex GPC-101 (SHOWA DENKO K.K.) with two of Shodex OHpak SB-806M HQ columns (SHOWA DENKO K.K.), and a mixed solvent (1:1) of 0.2M sodium nitrate aqueous solution and 0.5M acetonitrile acetate solution as a solvent. The flow rate was 1.0 ml/min. The number average and the weight average molecular weights were calculated using a polyethylene oxide analytical curve created by Shodex 480II.

### Production Example 3: Synthesis of ionic liquid polymer/silica fine composite particles (number average molecular weight = 60000)

Synthesis was performed according to the method of Production Example 2 except that the molar ratio upon synthesis was changed to EBIB:2,2'-bipy:CuCl [mixture of CuCl(I) and CuCl2(II)]:DEMM-TFSI=1:20:10:1000, and the mixture was kept at 70°C for 17 hours, thereby synthesizing silica fine particles having closely packed Poly(DEMM-TFSI) on the surfaces (Poly(DEMM-TFSI)/SiP). The number average molecular weight (Mn) and the molecular weight distribution index (Mw/Mn) of the free polymer cooperatively formed in the synthesis system were 60000 and 1.17, respectively. Further, the surface occupancy of the fine composite particles was 30%.

### Example 1: Production of Lithium Polymer Battery (monopolar-type)

### ■ Production of Negative Electrode

The electrode used in this example was AKO-6 manufactured by Enerstruct, Inc. (T. Sato et al./Journal of Power Sources 164 (2007) 390-3969). The material of the negative electrode was particulate Li₄Ti₅O₁₂ in which the particles are bonded to each other with a binder. The electrode capacitance was 0.42 mAh cm⁻², the electrode density was 3.00 mg cm⁻², and the electrode thickness was 25 µm. The collector was formed of a 13 µm copper foil.

### ■ Production of Positive Electrode

The electrode used herein was CKT-22 manufactured by Enerstruct, Inc. The material of the positive electrode was particulate LiMn₂O₄ in which the particles are bonded to each other with a binder. The electrode capacitance was 0.49 mAh cm⁻², the electrode density was 6.60 mg cm⁻², and the electrode thickness was 36-37 µm. The collector was formed of a 20 µm aluminum.

### ■ Production of Battery

The positive electrode was cut into a 4 cm × 4 cm rectangle. The negative electrode of 4 cm × 4 cm was used. An electrolyte solution was created to form a polymer electrolyte. The fine composite particles of production Example 2, the ionic liquid (DEME-TFSI), and the lithium salt LiTFSI at a proportion of 66:22:12 (parts by weight) were dispersed in a propylene carbonate (PC). The mixture was permeated into a polyamide fiber separator. PC was removed at 70°C, -100 kPa, 15 hr (or more), thereby forming a solid electrolyte in the separator. The lithium salt concentration in the polymer electrolyte is 0.5 mol/L. On the other hand, the positive and negative electrodes were also immersed in the above solution. As the immersion condition, PC was completely removed at 70°C, -100 kPa, and 15 hr (or more). The positive electrode, the separator, and the negative electrode were stacked and vacuum-packed using a laminate film. The obtained battery had a capacitance of 5 mAh/battery. Charging was performed at 0.05C to 1.5V→3V, and discharging was performed at 0.05C to 3V→1.5V at a temperature of 40° C.

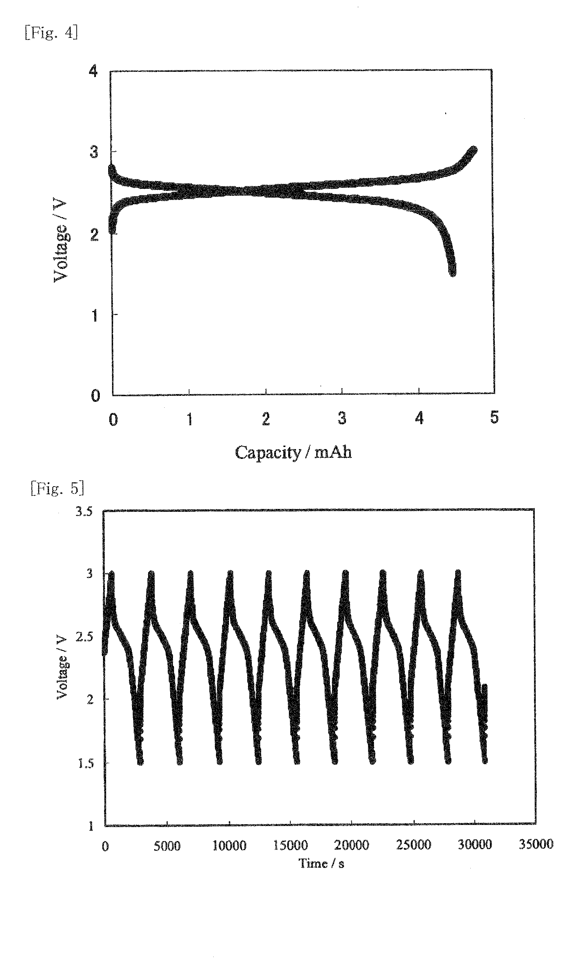

Figs. 4 and 5 show the results. Fig. 4 shows a charge/discharge curve of a battery, and Fig. 5 shows a result of a charge-discharge cycle of a battery. Further, it was confirmed using a scanning electron microscopy that the gaps of the particulate electrode active material were filled with the fine composite particles.

### Example 2: Production of Bipolar Electric Double-Layer Capacitor

An electrode was created according to the following method. First, so as to create an electrode active layer, ink including calcined coconut shell activated carbon (manufactured by Nisshinbo Industries, Inc., surface area = 2000 m²g⁻¹, average gap diameter = 20 nm, average particle size = 8 µm), acetylene black, poly(vinylidene fluoride: PVDF, average Mw Ca. 534,000, manufactured by Sigma-Aldrich Fine Chemicals, Inc.), and N-methy-2-pyrrolidone (NMP) was prepared. The resulting ink was applied directly onto both surfaces of an aluminum oxide foil (30 µm) using a blade, followed by drying at 140°C for 72 hours in vacuum to remove NMP and moisture. Here, the dried electrode was compressed by roll-compression at 30 MPa, followed by drying at 120°C for 15 hours in vacuum. In this manner, an electrode containing 89 wt% of calcined coconut shell activated carbon, 5 wt% of acetylene black, and 6 wt% of PVDF was obtained. The electrode was cut into a 20 mm × 40 mm size. The active layer was 150 µm.

A bank-shaped frame was formed around the activated carbon electrode using an ultraviolet-curable resin. Here, the width of the frame was 0.5 cm, and the height of the frame was 50 µm higher than the activated carbon electrode surface. After the frame was formed, the frame was cured by ultraviolet scanning irradiation. Thereafter, the frame on the electrode was filled with a solution for forming an electrolyte. The solution was prepared by mixing fine composite particles (Production Example 2) and ionic liquid (DEME-TFSI) at 75:25 (parts by weight) with a propylene carbonate. Thereafter, PC was removed at 70°C, -100 kPa, for 15 hr (or more), thereby forming a solid electrolyte on an electrode surface. The lowermost electrode contained an activated carbon electrode layer on one surface, the second electrode contained activated carbon electrode layers on both surfaces, and the topmost electrode contained an activated carbon electrode layer on one surface. The intermediate electrode is a bipolar electrode in which positive and negative electrodes are provided on the front and rear sides. Further, it was confirmed using a scanning electron microscopy that the gaps of the electrode material layer are filled with fine composite particles. Terminals were pulled out from the lowermost and the topmost layers, and the electrode lamination was vacuum-packed with a laminate film. Obtained was a bipolar electric double-layer capacitor having 0V-5V driving voltage.

Fig. 6 shows the results. Fig. 6 shows a charge/discharge curve of the battery.

### Example 3: Dip Coating Method

A substrate was immersed in a solution of a volatile solvent containing fine composite particles, an ionic liquid, a thickener (such as various polymers) or the like. By drawing out the substrate, a fine composite particles/ionic liquid hybrid film was formed on the substrate. More specifically, this step was performed under the following conditions.

Solution Concentration: Acetonitrile Solution Containing 18 wt% of Fine Composite Particles (Production Example 2) and 5 wt% of Ionic Liquid (DEME-TFSI)
Substrate: Silicon Wafer
Drawing Speed: 1 µm/s to 2000 µm/s
Table 1 shows the results. "Proportion in Membrane" in the table designates a weight-basis proportion of each component in the obtained membrane.

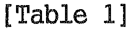

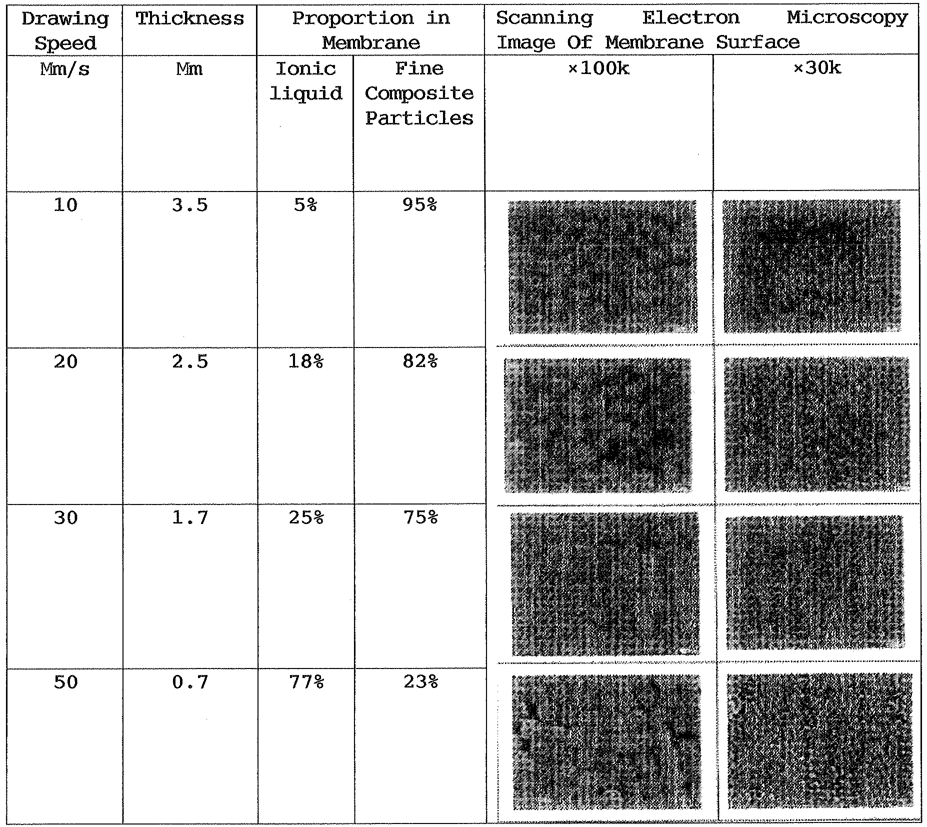

Adjustment of drawing speed, formulation and concentration of solution, and addition of ionic liquid polymer as a thickener enabled control of film thickness and ionic liquid concentration of the membrane. In the above conditions, a membrane suitable for a solid electrolyte membrane was obtained at a drawing speed of 20 to 30 µm/s. It was also confirmed that multiple laminations (by repeating the immersion/drawing cycle) were possible.

### Example 4: Production Example of Bipolar Cell

### (I) Production Example of Positive Electrode

Lithium manganate (M-5105A) manufactured by Toda Kogyo Corp, and an electricity-conducting carbon (DENKA black HS-100) manufactured by Denki Kagaku Kogyo Kabushiki Kaisha were powder-mixed using a Mazerustar, which is a centrifugal stirrer manufactured by Nitto Boseki Co., Ltd. As binder polymers, polyvinylidene fluoride (PVDF: KF polymer #1320; manufactured by Kureha) and N-methyl pyrrolidone (NMP) were added to the mixture, and the resulting mixture was evenly stirred using a Mazerustar, thereby obtaining a positive electrode producing ink. The formulation of this ink by parts by weight was lithium manganate:electricity-conducting carbon:PVDF:NMP = 84:8:8:60. This ink was applied and spread on a 15 µm aluminum foil (Fig. 8(a)). The size of electrode application surface was a 40 mm × 20 mm rectangle. The thickness of the electrode portion was 70 µm. A frame was formed around an electrode (Fig. 8(b)) using an ultraviolet-curable resin (World Lock No. 801SE-LG1, manufactured by Kyoritu Chemical & Co., Ltd.). The frame was formed to have a width of 5 mm and a height of 160 µm. The resin was irradiated with ultraviolet using UV SPOT LIGHT SOURCE L9588-01 (manufactured by Hamamatsu Photonics K.K.) to be cured. The curing was performed at room temperature for 2 minutes (Fig. 8(c)).

### (II) Production Example of Negative Electrode

Lithium titanate (LT-105) manufactured by Ishihara Sangyo Kaisha, Ltd., and an electricity-conducting carbon (DENKA black HS-100) manufactured by Denki Kagaku Kogyo Kabushiki Kaisha were powder-mixed using a Mazerustar, which is a centrifugal stirrer manufactured by Nitto Boseki Co., Ltd. As binder polymers, polyvinylidene fluoride (PVDF: KF polymer #9130; manufactured by Kureha) and N-methyl pyrrolidone (NMP) were added to the mixture, and the resulting mixture was evenly stirred using a Mazerustar, thereby obtaining a negative electrode producing ink. The formulation of this ink by parts by weight was lithium titanate:electricity-conducting carbon:PVDF:NMP =82:8:10:60. This ink was applied and spread on a 15 µm aluminum foil (Fig. 8(a)). The size of electrode application surface was a 40 mm × 20 mm rectangle. The thickness of the electrode portion was 70 µm (Fig. 8(d)).

### (III) Production of bipolar cell

The ionic liquid polymer/silica composite fine particles according to Production Example 2 were dispersed in an appropriate amount of propylene carbonate (PC). An ionic liquid (DEME-TFSI) and lithium salts (Li-TFSI) were added to this dispersion to obtain an even solution. The formulation of this solution was fine composite particles:DEME-TFSI:Li-TFST:PC=0.423 g:0.141 g:0.081 g:10 g. The solution was allowed to stand at 50°C under reduced pressure to be subjected to solidification by drying under reduced pressure until no weight change was observed. PC was added again to the resulting solid (fine composite particles+DEME-TFSI+Li-TFSI) thereby obtaining a PC solution having a concentration of 70 wt%. This solution was added dropwise to a positive electrode previously subjected to 15-hour drying under reduced pressure at 50°C (Fig. 8(c)). The resulting electrode was subjected to drying under reduced pressure at 50°C for an entire day, thereby completely evaporating PC. A positive electrode in which a fine particle solid membrane was formed on an electrode was thus obtained (Fig. 9(a)).

Meanwhile, a solution was obtained by dissolving Li-TFSI in an ionic liquid DEME-TFSI at a concentration of 1 mol/L. This ionic liquid solution was permeated into the electrode layer of a negative electrode previously subjected to 15-hour drying under reduced pressure at 50°C (Fig. 8(d)). After the liquid is permeated into the layer, the solution adhered to the periphery was cleaned off and the electrode was allowed to stand at 50°C for a day under reduced pressure to facilitate the permeation of the solution into the electrode. There were no droplets on the electrode surface after vacuum permeation; the surface was dry. (Fig. 9(b)).

The aluminum foils of the positive and the negative electrodes produced in the above manner were adhered to each other, and at least 10 no-electrode portions (portions where electrodes are not formed) were fused using a spot welder, thereby producing a bipolar electrode having positive and negative electrodes on the front and rear sides (Fig. 9(c)(d)). Thereafter, the positive electrode, the bipolar electrode, and the negative electrode were stacked on top of one another in this order, and nickel terminals 600 were spot-welded to the lowermost positive electrode and the uppermost negative electrode. The top and the bottom of the lamination were covered with 300 µm-thick polypropylene plates. The resulting lamination was inserted in an aluminum laminate battery pack, which was then sealed by vacuum heat sealing. A flame-retardant solid lithium polymer high-voltage battery was thus obtained (Fig. 9(e)(f)).

### (IV) Charging and discharging

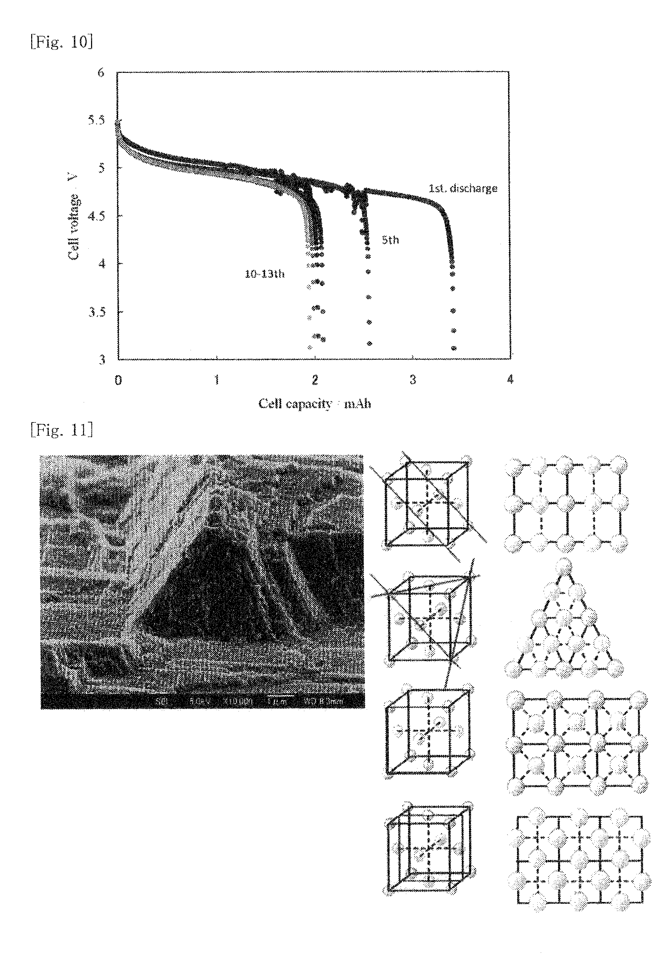

The voltage upon discharge of the resulting battery was 3.0V. The charging was performed at a rate of 0.1C, and a full-charged voltage was 6.0V. The battery capacity was 3.5 mAh/battery. It was confirmed that a repeating charge-discharge from 3V to 6V was possible. No capacity degradation occurred after 10 or more charge-discharge cycles. Thus, the function as a rechargeable battery was confirmed. Fig. 10 shows the results.

### Example 5: Production of Solid Electrolyte Membrane

The solution obtained in Production Example 2 by mixing 75 parts by weight of fine composite particles, 25 parts by weight of ionic liquid (DEME-TFSI), and 150 parts by weight of acetonitrile was casted onto a stainless base, and acetonitrile was evaporated in the room. Thereafter, acetonitrile was completely evaporated in a vacuum dryer at 30°C to obtain a solid membrane. The resulting solid membrane was observed with a scanning electron microscopy, thereby confirming that the array of the fine particles has a face-centered cubic lattice structure (Fig. 11).

### Example 6: Dip Coating of Electrode

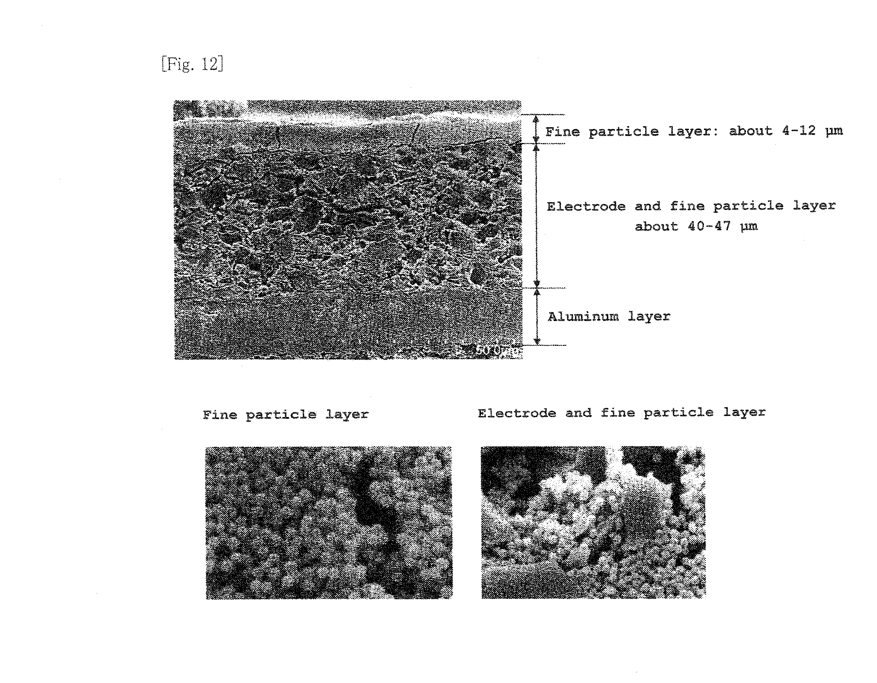

Using the lithium ion battery obtained in Example 1 as a base material, dip coating was performed as in Example 3. According to an electron microscope image (Fig. 12) of the resulting electrode, it was confirmed that the gaps of the electrode material were filled with fine composite particles.

### Reference Numerals

Fig. 1
   100: negative electrode
   101: collector
   102: negative electrode material layer
   200: positive electrode
   201: collector
   202: positive electrode material layer
   300: solid electrolyte
Fig. 2
   100: negative electrode
   101: collector
   102: negative electrode material layer
   200: positive electrode
   201: collector
   202: positive electrode material layer
   300: solid electrolyte
   400: bipolar electrode
   401: collector
Fig. 7
   201: collector
   202: positive electrode material
   500: frame
Fig. 8
   101: collector of negative electrode
   200: positive electrode
   201: collector of positive electrode
   202: positive electrode material layer
   500: frame
Fig. 9
   101: collector of negative electrode
   102: negative electrode material layer
   201: collector of positive electrode
   202: positive electrode material layer
   300: solid electrolyte
   500: frame
   600: terminal
   700: polypropylene plate

## Claims

1. An electrochemical device comprising:
a negative electrode having a negative electrode material layer at least on a surface;
a positive electrode having a positive electrode material layer at least on a surface; and
a solid electrolyte disposed between the negative electrode and the positive electrode,
wherein:
(1) the solid electrolyte is a solid polymer electrolyte that contains, as a main component, fine composite particles each comprising a polymer brush layer composed of polymer graft chains obtained by polymerization of a monomer having a polymerizable functional group, the fine composite particles forming a substantially three-dimensional ordered array structure, a continuous ion-conductive network channel being formed in gaps between the fine composite particles,
(2) the negative electrode or the negative electrode material layer and/or the positive electrode or the positive electrode material layer have gaps filled with the fine composite particles, and
(3) a contact interface between the solid electrolyte and the electrode material layer or the electrode is a polymer brush layer composed of polymer graft chains (the electrode material layer is at least one layer selected from the group consisting of the negative electrode material layer and the positive electrode active material layer, and the electrode is at least one electrode selected from the group consisting of the negative electrode and the positive electrode).

2. The electrochemical device according to claim 1, wherein the electrochemical device is a lithium ion rechargeable battery or an electrochemical capacitor.

3. The electrochemical device according to claim 1, wherein the monomer is an ionic liquid monomer; a surface occupancy of the polymer graft chains on the fine composite particles is 5 to 50%; a molecular weight distribution index of the polymer graft chains is 1.5 or less; the fine composite particles have a particle diameter of 30 nm to 10 µm; and an ionic conductivity is 0.08 mS/cm or more at 35°C.

4. The electrochemical device according to claim 1, wherein the electrochemical device contains a liquid compatible with the polymer graft chains.

5. The electrochemical device according to claim 4, wherein the liquid is an ionic liquid compatible with the polymer graft chains.

6. The electrochemical device according to claim 1, wherein the electrochemical device comprises a bipolar electrode between the negative electrode and the positive electrode via solid electrolytes, the bipolar electrode comprising a positive electrode material layer on one surface and a negative electrode material layer on the other surface.

7. The electrochemical device according to claim 1, wherein the electrochemical device further comprises a mobile ion.

8. The electrochemical device according to claim 1, wherein the mobile ion is a lithium ion.

9. The electrochemical device according to claim 1, wherein the electrochemical device comprises a bipolar electrode between the negative electrode and the positive electrode via solid electrolytes, the bipolar electrode comprising a positive electrode material layer on one surface and a negative electrode material layer on the other surface.

10. The electrochemical device according to claim 1,
wherein:
the electrochemical device comprises negative and positive electrodes, each of which comprises a sheet-like collector and an electrode material layer formed thereon; and a solid electrolyte layer disposed between the negative and positive electrodes, and
the electrochemical device comprises a frame that surrounds the solid electrolyte and each lateral side of the electrode material layers of the negative electrode and/or positive electrode formed on sheet-like electrodes, the frame being in close contact with each collector on which an electrode material layer is formed.

11. The electrochemical device according to claim 10,
wherein:
each electrode material layer of the negative and positive electrodes is formed on a part of one surface of each collector,
the frame surrounds a solid electrolyte and each lateral side of the electrode material layers of the negative electrode and/or positive electrode while being in close contact with each collector, and
the frame abuts and supports the collector to prevent warping of the collector.

12. A method for producing an electrochemical device, comprising:
a solid electrolyte membrane-attached-electrode-producing step of:
forming a frame on an electrode having an electrode material layer that is formed by applying ink containing either a positive electrode active material or a negative electrode active material onto a collector in a manner such that the frame surrounds the electrode material layer, and forming a solid electrolyte membrane by introducing, into the frame, a paste containing fine composite particles each comprising a polymer brush layer composed of polymer graft chains obtained by polymerization of a monomer having a polymerizable functional group, and drying the paste;
a fine composite particle-filled electrode-producing step of:
permeating an ionic liquid solution of the fine composite particles into an electrode having an electrode material layer formed by applying ink containing another electrode active material of the positive or negative electrode that is different from said electrode active material onto a collector, thereby forming an electrode in which the gaps of the electrode material layer are filled with the fine composite particles; and
an assembly step of:
superimposing the solid electrolyte membrane of the electrode obtained in the solid electrolyte membrane-attached-electrode-producing step onto an electrode surface of the electrode filled with the fine composite particles obtained in the fine composite particle-filled-electrode producing step, thereby forming a contact interface of the electrode material layer and the solid electrolyte comprising a polymer brush layer.
